(19) Europäisches Patentamt
European Patent Office
Office européen des brevets

(11) Veröffentlichungsnummer : **0 086 469**
**B1**

(12) # EUROPÄISCHE PATENTSCHRIFT

(45) Veröffentlichungstag der Patentschrift : **30.01.85**

(51) Int. Cl.$^4$ : **C 09 J 3/14**, C 08 F220/00

(21) Anmeldenummer : **83101327.1**

(22) Anmeldetag : **11.02.83**

(54) **Montageklebstoffsysteme.**

(30) Priorität : **11.02.82 US 347847**

(43) Veröffentlichungstag der Anmeldung : **24.08.83 Patentblatt 83/34**

(45) Bekanntmachung des Hinweises auf die Patenterteilung : **30.01.85 Patentblatt 85/05**

(84) Benannte Vertragsstaaten : **AT BE CH IT LI NL SE**

(56) Entgegenhaltungen :
**GB-A- 2 084 161**
**US-A- 4 322 509**

(73) Patentinhaber : **LORD CORPORATION**
**1635 West 12th Street**
**Erie Pennsylvania (US)**

(72) Erfinder : **Dawdy, Terrance Harris**
**112 Parkway Drive**
**Erie Pennsylvania (US)**

(74) Vertreter : **Dipl.-Phys.Dr. Manitz Dipl.-Ing. Finsterwald**
**Dipl.-Ing. Grämkow Dipl.-Chem.Dr. Heyn**
**Dipl.-Phys.Rotermund**
**B.Sc. Morgan Robert-Koch-Strasse 1**
**D-8000 München 22 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 086 469 B1**

Jouve, 18, rue St-Denis, 75001 Paris, France

**Beschreibung**

Die Erfindung betrifft neue Montageklebstoffe zum Verkleben von Metallen und Kunststoffen. Die Klebstoffe umfassen eine Lösung oder Dispersion eines polymeren Materials, eines mit einem solchen polymeren Material copolymerisierbaren Monomeren und phosphorhaltige Verbindungen, und sie zeichnen sich durch verbessertes Verhalten bei erhöhten Temperaturen und ausgezeichnete Beständigkeit gegenüber thermischem Abbau aus.

Montageklebstoffzusammensetzungen sind wohlbekannte, handelsübliche Gegenstände und sie werden in der Technik zum Verkleben von Metallen und Kunststoffmaterialien weit verbreitet angewandt. Die Eigenschaften der Belastbarkeit und der Spannungsentlastung von Montageklebstoffen wie auch ihre Haftfestigkeit, welche die Festigkeit der hiermit verklebten Werkstoffe übersteigen können, machen solche Klebstoffe zu attraktiven Alternativen oder Ersatzmaterialien für mechanische Verbindungen wie Nieten oder Punktschweißverbindungen beim Verbinden von Konstruktionsmaterialien, insbesondere in den Fällen, bei denen es bevorzugt wird, Belastungsspannungen über größere Flächen zu verteilen statt solche Spannungen an wenigen Punkten zu konzentrieren. Ihre Verwendung kann kostspielige Endbearbeitungen, welche bei mechanischen Verbindungsmethoden erforderlich sind, reduzieren oder ausschalten, es kann ein besseres Aussehen erreicht werden und zumindest die Möglichkeit der Korrosion von Zusammenbauten, welche eine oder mehrere Metallkomponenten enthalten, herabgesetzt werden. Zusätzlich können sie zum Verkleben oder Verbinden einer Vielzahl von Metallen ohne übermäßige Oberflächenvorbehandlungen verwendet werden. Beispielsweise sind in den US-Patentschriften 4 223 115 und 3 890 407 Montageklebstoffzusammensetzungen auf Acrylbasis beschrieben, wobei diese wirksame Klebematerialien für ölige Metalloberflächen verwendet werden können.

Trotz der vorteilhaften Eigenschaften von Acrylmontageklebstoffen sind diese nicht mängelfrei. Beispielsweise ist ein weites Anwendungsgebiet für solche Klebstoffe das Verkleben von Leichtmetallen und Kunststoffmaterialien in der Transportindustrie bei der Herstellung von Fahrzeugzellen bzw. Fahrzeugkörpern und Komponententeilen. Bei solchen Anwendungen wird der fertige Zusammenbau üblicherweise nach dem Aushärten des Klebstoffes mit einem Anstrich versehen, vorzugsweise bei Umgebungstemperaturen, und die angestrichenen Oberflächen werden einem Einbrennzyklus bei Temperaturen oberhalb von 100 °C unterworfen, um das Aushärten und die Haftung des Anstrichfilmes zu verbessern. Obwohl Acrylklebstoffe ausgezeichnete Hafteigenschaften bei Umgebungstemperaturen zeigen, wurde gefunden, daß mit solchen Klebstoffen verklebte Zusammenbauten, wenn sie erhöhten Temperaturen des Einbrennzyklus ausgesetzt werden, einen signifikanten Verlust an Haftfestigkeit erleiden, wenn sie bei Temperaturen, welche den beim Einbrennzyklus angewandten Temperaturen entsprechen, getestet werden, und daß sie eine Verminderung der anfänglichen Haftwerte zeigen, wenn sie bei Umgebungstemperatur im Anschluß an die Behandlung bei solchen erhöhten Temperaturen untersucht werden. Ganz offensichtlich würden Verbesserungen des Verhaltens bei erhöhter Temperatur ohne sonstige Abstriche an der Leistungsfähigkeit die Verwendung von Acrylmontageklebstoffen signifikant verbessern.

Aufgabe der Erfindung ist daher die Bereitstellung solcher verbesserter Montageklebstoffe.

Zur Lösung dieser Aufgabe dienen die erfindungsgemäßen Acrylmontageklebstoffe mit verbesserten Eigenschaften bei erhöhter Temperatur und verbesserter Beständigkeit gegenüber thermischem Abbau, die dadurch gekennzeichnet sind, daß sie in Kombination umfassen :

A) wenigstens ein polymeres Material, ausgewählt aus der folgenden Gruppe :

a) wenigstens einem olefinisch ungesättigten Urethanreaktionsprodukt von wenigstens einem isocyanatfunktionellen Vorpolymeren und wenigstens einem hydroxyfunktionellen Monomeren, das wenigstens eine Einheit an polymerisierbarer olefinischer Unsättigung aufweist, wobei ein solches Reaktionsprodukt durch die Anwesenheit von wenigstens zwei inheiten an olefinischer Unsättigung und das praktische Fehlen von freien Isocyanatgruppen gekennzeichnet ist ;

b) wenigstens einem elastomeren, polymeren Material auf Butadienbasis, ausgewählt aus der folgenden Gruppe :

(i) Homopolymere von Butadien,

(ii) Copolymere von Butadien und wenigstens einem hiermit copolymerisierbaren Monomeren aus der Gruppe Styrol, Acrylnitril, Methacrylnitril oder Mischungen hiervon,

(iii) modifiziertem, elastomerem, polymerem Material, ausgewählt aus der aus Butadienhomopolymeren und Copolymeren entsprechend der zuvor gegebenen Definition bestehenden Gruppe, wobei ein solches Homopolymeres und Copolymeres durch Copolymerisation von Spurenmengen von bis zu 5 Gew.-%, bezogen auf das Gewicht des elastomeren Materials, von wenigstens einem funktionellen Monomeren modifiziert worden ist, und

(iv) Mischungen hiervon ; und

c) Mischungen von solchem olefinisch ungesättigten Urethanreaktionsprodukt und solchem elastomeren, polymeren Material auf Butadienbasis ;

B) wenigstens einem polymerisierbaren Material, ausgewählt aus der Gruppe bestehend aus Styrol und Acrylmonomeren oder substituierten Acrylmonomeren, Polymeren von einem oder mehreren solcher Monomerer und partiell polymerisiertem Sirup von einem oder mehreren solcher Monomeren, wobei ein

solcher Sirup sowohl Polymeres als auch nichtpolymerisiertes Monomeres enthält, und aus Mischungen hiervon ;

C) wenigstens einer phosphorhaltigen Verbindung, und

D) einem bei Zimmertemperatur aktiven Redoxkatalysatorsystem.

Die erfindungsgemäßen Acrylmontageklebstoffzusammensetzungen zeichnen sich durch praktisches Fehlen von freien organischen oder anorganischen Säureverbindungen, insbesondere Methacrylsäure, aus, ausgenommen die Spurenmengen der Carboxywerte, welche in dem modifizierten, elastomeren, polymeren Material auf Butadienbasis und der phosphorhaltigen Verbindung vorliegen können. Der Ausschluß von sauren Verbindungen scheint das verbesserte Hochtemperaturverhalten ohne offensichtliche schädliche Nebeneffekte zu bedingen, wobei dieses Ergebnis überraschend ist, da bekanntermaßen die Zugabe von sauren Verbindungen, insbesondere von Methacrylsäure, in Mengen von bis zu 5 bis 7 Gew.-% dahingehend wirkt, die Haftung an Metall zu verbessern und zur Beschleunigung des Aushärtens von Acrylklebstoffen wirksam ist, wenn die Menge der Säure, welche in die Acrylklebstoffzusammensetzung eingegeben wird, oberhalb von 5 bis 7 Gew.-% liegt.

Ganz besonders umfassen die bei Zimmertemperatur aushärtbaren Acrylmontageklebstoffzusammensetzungen der Erfindung :

A) wenigstens ein polymeres Material, ausgewählt aus der Gruppe bestehend aus :

a) wenigstens einem olefinisch ungesättigten Urethanreaktionsprodukt von wenigstens einem isocyanatfunktionellen Vorpolymeren und wenigstens einem hydroxyfunktionellen Monomeren, das wenigstens eine Einheit an polymerisierbarer, olefinischer Unsättigung aufweist, wobei ein solches Reaktionsprodukt durch die Anwesenheit von wenigstens zwei Einheiten von olefinischer Unsättigung und durch das praktische Fehlen von freien Isocyanatgruppen gekennzeichnet ist ;

b) wenigstens einem elastomeren, polymeren Material auf Butadienbasis, ausgewählt aus der Gruppe bestehend aus

(i) Homopolymeren von Butadien,

(ii) Copolymeren von Butadien und wenigstens einem hiermit copolymerisierbaren Monomeren ausgewählt aus der aus Styrol, Acrylnitril, Methacrylnitril und Mischungen hiervon bestehenden Gruppe,

(iii) modifiziertem elastomeren, polymeren Material, ausgewählt aus der Gruppe bestehend aus Butadienhomopolymerem und Copolymerem entsprechend der zuvor gegebenen Definition, wobei ein solches Homopolymeres und Copolymeres durch Copolymerisation von Spurenmengen von bis zu 5 Gew.-%, bezogen auf das Gewicht des elastomeren Materials, von wenigstens einem funktionellen Monomeren hierin modifiziert worden ist, und

(iv) Mischungen hiervon ; und

c) Mischungen von solchem olefinisch ungesättigtem Urethanreaktionsprodukt und solchem elastomeren, polymeren Material auf Butadienbasis ;

B) wenigstens einem polymerisierbaren Material, ausgewählt aus der aus Styrol und Acrylmonomeren oder substituierten Acrylmonomeren, Polymeren von einem oder mehreren solcher Monomeren oder partiell polymerisiertem Sirup von einem oder mehreren solchen Monomeren, wobei ein solcher Sirup sowohl polymeres als auch nichtpolymerisiertes Monomeres enthält, und Mischungen hiervon bestehenden Gruppe ;

C) wenigstens einer phosphorhaltigen Verbindung ;

D) wenigstens einem Reduktionsmittel von einem bei Zimmertemperatur aktiven Redoxkuppelkatalysatorsystem ; und

E) einem Abbindebeschleuniger, welcher wenigstens ein Oxidationsmittel eines bei Zimmertemperatur aktiven Redoxkuppelkatalysatorsystems enthält, wobei dieses Oxidationsmittel bei Zimmertemperatur mit dem Reduktionsmittel unter Bildung von freien Radikalen reaktionsfähig ist, welche zur Initiierung der Polymerisation des additionspolymerisierbaren, polymeren Materials und des polymerisierbaren, olefinisch ungesättigten Monomeren, Polymeren von einem oder mehrerer solcher Monomerer oder des partiell polymerisierten Sirups von einem oder mehreren solcher Monomerer wirksam ist, wobei die Menge von einem solchen olefinisch ungesättigten Urethanreaktionsprodukt im Bereich von 10 bis 90 und vorzugsweise 13 bis 83 Gew.-%, bezogen auf das Gesamtgewicht der polymerisierbaren Materialien und des Reduktionsmittels, beträgt ; die Menge eines solchen elastomeren, polymeren Materials auf Butadienbasis im Bereich von 1 bis 30 und vorzugsweise 7 bis 27 Gew.-%, bezogen auf das Gesamtgewicht von polymerisierbaren Materialien und Reduktionsmittel, liegt ; die Menge des Styrols und Acrylmonomeren oder substituierten Acrylmonomeren, Polymeren von einem oder mehreren solcher Monomerer, partiell polymerisierten Sirups von einem oder mehreren solcher Monomerer oder Mischungen hiervon im Bereich von 10 bis 90, vorzugsweise 17 bis 87 Gew.-%, bezogen auf das Gesamtgewicht der polymerisierbaren Materialien und des Reduktionsmittels, liegt ; die Menge der phosphorhaltigen Verbindung im Bereich von 0,1 bis 20, vorzugsweise 2 bis 10 Gew.-%, bezogen auf das Gesamtgewicht der polymerisierbaren Materialien und des Reduktionsmittels, beträgt ; die Menge dieses Reduktionsmittels im Bereich von 0,05 bis 10, vorzugsweise 0,1 bis 6 Gew.-%, bezogen auf das Gesamtgewicht der polymerisierbaren Materialien, beträgt, und die Menge des Oxidationsmittels im Bereich von 0,5 bis 30, vorzugsweise 1 bis 10 Gew.-%, bezogen auf das Gesamtgewicht des Abbindebeschleunigers liegt, und wobei eine solche Klebstoffzusammensetzung durch das praktische Fehlen von freien organischen und anorganischen, sauren Verbindungen gekennzeichnet ist, ausgenommen für die

Spurenmengen an Carboxylwerten, welche in diesem modifizierten elastomeren polymeren Material auf Butadienbasis einpolymerisiert sein können, und ausgenommen die Säurewerte der phosphorhaltigen Verbindung.

Die erfindungsgemäßen Klebstoffzusammensetzungen können wahlweise bis zu 50, vorzugsweise nicht mehr als 25 Gew.-%, bezogen auf das Gesamtgewicht des polymerisierbaren Materials und des Reduktionsmittels, an wenigstens einem polymerisierbaren, olefinisch ungesättigten, nichtacrylartigen Monomeren, bis zu 60, vorzugsweise nicht mehr als 30 Gew.-%, bezogen auf das Gesamtgewicht von polymerisierbarem Material und Reduktionsmittel, an wenigstens einem polymerisierbaren, polymeren Material mit einer grundmolaren Viskositätszahl im Bereich von 0,1 bis 1,3 enthalten, wobei ein solches polymeres Material aus der Polymerisation von wenigstens einem Styrolmonomeren, Acrylmonomeren, substituierten Acrylmonomeren, olefinisch ungesättigten Nichtacrylmonomeren oder Mischungen hiervon erhalten ist, und sie können wahlweise bis zu 40 und vorzugsweise nicht mehr als 30 Gew.-%, bezogen auf das Gesamtgewicht an polymerisierbarem Material und Reduktionsmittel, an wenigstens einem additionspolymerisierbaren, elastomeren, polymeren material mit einer Einfriertemperatur unterhalb von 5 °C enthalten.

Ein besonders bevorzugter bei Zimmertemperatur aushärtbarer Acrylklebstoff gemäß der Erfindung besteht im wesentlichen aus :

A) als eine polymerisierbare Klebstoffzusammensetzung ein Gemisch von

a) von etwa 10 bis etwa 90 Gew.-% wenigstens eines polymerisierbaren Materials in Form von Styrol, Methylmethacrylat, Ethylmethacrylat, n-Butylmethacrylat, Isobutylmethacrylat, t-Butylmethacrylat, Hexylmethacrylat, Ethylhexylmethacrylat, partiell polymerisiertem Sirup von einem oder mehreren solcher Monomerer, wobei ein solcher Sirup sowohl polymeres als auch nichtpolymerisiertes Monomeres enthält, oder von Mischungen hiervon ;

b) von etwa 10 bis etwa 90, und vorzugsweise von etwa 13 bis etwa 87 Gew.-% wenigstens eines Reaktionsproduktes von isocyanatfunktionellem Vorpolymerem und hydroxyfunktionellem Monomerem, das wenigstens eine Einheit an polymerisierbarer, olefinischer Unsättigung aufweist, wobei ein solches Reaktionsprodukt durch das praktische Fehlen von freien Isocyanatgruppen gekennzeichnet ist ;

c) von 0 bis etwa 20 Gew.-% wenigstens eines polymerisierbaren, ethylenisch ungesättigten Monomeren, wobei die Menge eines solchen Monomeren zusätzlich zu der Menge irgendeines unter a) verwendeten solchen Monomeren vorliegt ;

d) von 0 bis etwa 40 Gew.-% wenigstens eines elastomeren, polymeren Materials mit einer Einfriertemperatur unterhalb etwa 5 °C,
wobei die jeweiligen Gewichtsprozente von a), b), c) und d) auf das Gesamtgewicht von a), b), c) und d) bezogen sind ;

e) einer wirksamen Menge wenigstens einer phosphorhaltigen Verbindung ;

f) einer wirksamen Menge wenigstens eines Reduktionsmittels, und

B) als Abbindebeschleuniger einer wirksamen Menge wenigstens eines Oxidationsmittels, wobei dieses Oxidationsmittel bei Zimmertemperatur mit dem Reduktionsmittel unter Bildung von freien Radikalen reaktionsfähig ist, welche zur Initiierung der Additionspolymerisation der polymerisierbaren Klebstoffzusammensetzung wirksam sind, und wobei eine solche Klebstoffzusammensetzung durch das praktische Fehlen von freien organischen und anorganischen Säureverbindungen gekennzeichnet ist, mit Ausnahme von Spurenmengen bis zu 5 Gew.-% an Carboxylwerten, welche in dem elastomeren, polymeren Material mit einer Einfriertemperatur unterhalb von 5 °C vorliegen können.

Ein zweiter, besonders bevorzugter, bei Zimmertemperatur aushärtbarer Acrylklebstoff gemäß der Erfindung besteht im wesentlichen aus :

AA) als polymerisierbare Klebstoffzusammensetzung einem Gemisch von

a) von etwa 1 bis etwa 30 Gew.-% wenigstens eines elastomeren polymeren Materials, ausgewählt aus der Gruppe bestehend aus Polybutadienhomopolymeren, einem Copolymeren von Butadien und wenigstens einem hiermit copolymerisierbaren Monomeren aus der Gruppe Styrol, Acrylnitril oder Methacrylnitril, modifiziertem polymerem Material ausgewählt aus der aus Polybutadienhomopolymeren und Copolymeren von Butadien entsprechend der zuvor gegebenen Beschreibung bestehenden Gruppe, welche durch Copolymerisation von Spurenmengen von bis zu 5 Gew.-% eines funktionellen Monomeren hierin modifiziert wurden, wobei das polymere Material eine Einfriertemperatur unterhalb etwa 5 °C besitzt ;

b) von etwa 25 bis etwa 85 Gew.-% wenigstens eines polymerisierbaren Acrylmonomeren oder substituierten Acrylmonomeren ;

c) von 0 bis etwa 50 Gew.-% wenigstens eines polymerisierbaren, olefinisch ungesättigten Nichtacrylmonomeren ;

d) von 0 bis etwa 60 Gew.-% eines Polymeren mit einer grundmolaren Viskositätszahl im Bereich von etwa 0,1 bis etwa 1,3, das von wenigstens einem der Monomeren b) und c) abstammt ;
wobei die jeweiligen Mengen von a), b), c) und d) auf das kombinierte Gesamtgewicht von a), b), c) und d) bezogen sind ;

e) einer phosphorhaltigen Verbindung ;

f) einem Reduktionsmittel ; und

AB) als Abbindebeschleuniger einem Oxidationsmittel, wobei das Oxidationsmittel bei

Zimmertemperatur mit dem Reduktionsmittel unter Bildung von freien Radikalen reaktionsfähig ist, welche zur Initiierung der Additionspolymerisation der polymerisierbaren Klebstoffzusammensetzung wirksam sind und wobei eine solche Klebstoffzusammensetzung durch das praktische Fehlen von freien organischen und anorganischen Säureverbindungen gekennzeichnet ist, mit der Ausnahme von Spurenmengen bis zu 5 Gew.-% an Carboxylwerten, welche in dem elastomeren, polymeren Material vorhanden sein können, und der Säurewerte der phosphorhaltigen Verbindung.

Representative Vertreter der monomeren Acrylverbindungen und substituierten Acrylverbindungen, welche zur Verwendung in den erfindungsgemäßen Klebstoffzusammensetzungen geeignet sind, umfassen, ohne daß dies eine Beschränkung darstellt: Methylacrylat, Butylacrylat, Isobutylacrylat, 2-Phenoxyacrylat, 2-Methoxyethylacrylat, 2-(N,N-Diethylamino)-ethylacrylat, 2-Ethylhexylacrylat, Acrylnitril, Methylacrylnitril, Neopentylglykoldiacrylat, Ethylenglykoldiacrylat, Diethylenglykoldiacrylat, Hexylenglykoldiacrylat, Trimethylolpropantriacrylat und die entsprechenden Methacrylatverbindungen. Es wurde gefunden, daß die Verwendung von polyfunktionellen acrylartigen und substituiert-acrylartigen, monomeren Verbindungen, welche wenigstens zwei und vorzugsweise drei oder mehr acrylartige oder substituiert-acrylartige funktionelle Gruppen besitzen, zur Verbesserung der Haftfestigkeit, der Hitzebeständigkeit und der Beständigkeit gegenüber thermischem Abbau wirksam ist. Solche polyfunktionellen, monomeren Verbindungen werden vorzugsweise im Bereich von 1 bis 30 und besonders bevorzugt 5 bis 25 Gew.-%, bezogen auf die Gesamtmenge an acrylartigen und substituiertacrylartigen, monomeren Verbindungen eingesetzt. Polymere, welche aus der Polymerisation von einem oder mehreren der monomeren acrylartigen und substituiert-acrylartigen Verbindungen erhalten wurden wie Poly(methylmethacrylat) und Poly(methylmethacrylat-ethylacrylat) und Polymer-in-Monomer-Sirupe, welche aus der partiellen Polymerisation von einem oder mehreren monomeren acrylartigen und substituiertacrylartigen Verbindungen erhalten wurden, sind ebenfalls zur Verwendung bei der Durchführung der Erfindung geeignet. Solche Polymer-in-Monomer-Sirupe enthalten typischerweise sowohl Polymeres als auch nichtpolymerisiertes Monomeres und können ebenfalls Neopren enthalten. Polymer-in-Monomer-Sirupe und Verfahren zur Herstellung solcher Sirupe sind an sich bekannt, so daß sie hier nicht im einzelnen erläutert werden müssen.

Polymerisierbare Nichtacrylmonomere, welche zur Verwendung bei der Durchführung der Erfindung geeignet sind, umfassen — ohne Beschränkung hierauf — Styrol, Vinylstyrol, Chlorstyrol, Vinylacetat und Vinylpyrrolidon.

Die isocyanatfunktionellen Vorpolymeren, welche bei der Durchführung der Erfindung geeignet sind, sind ebenfalls an sich bekannt. Typischerweise sind solche Vorpolymere Addukte oder Kondensationsprodukte von Polyisocyanatverbindungen, die wenigstens zwei freie Isocyanatgruppen aufweisen, und monomeren oder polymeren Polyolen mit wenigstens zwei Hydroxygruppen, einschließlich von Mischungen solcher Polyole. Die Reaktion zwischen dem Polyisocyanat und den Polyolen wird unter Verwendung einer Überschußmenge an Polyisocyanat durchgeführt, um sicherzustellen, daß das Reaktionsprodukt wenigstens zwei freie, nichtreagierte Isocyanatgruppen aufweist.

Bei der Herstellung der gemäß der Erfindung verwendeten isocyanatfunktionellen Vorpolymeren brauchbare Polyole besitzen vorzugsweise ein Durchschnittsmolekulargewicht von etwa 300 bis etwa 3 000. Geeignete Polyole umfassen Polyalkylenglykole wie Polyethylenglykole, Polyätherpolyole wie die Verbindungen, welche durch Additionspolymerisation von Ethylenoxid und einem Polyol wie Trimethylolpropan in einem Verhältnis zur Bereitstellung von nicht umgesetzten Hydroxylgruppen in dem Produkt hergestellt wurden, organische hydroxylierte Elastomere, die eine Einfriertemperatur (Glasübergangstemperatur zweiter Ordnung) unterhalb etwa 5 °C besitzen wie Poly(butadien-styrol)-polyole und Poly(butadien)-polyole, Polyesterpolyole, wie sie durch Polymerisation von Polyolen, z. B. Diethylenglykol, Trimethylolpropan oder 1,4-Butandiol, mit Polycarbonsäuren wie Phthalsäure, Terephthalsäure, Adipinsäure, Maleinsäure oder Bernsteinsäure in einem Verhältnis zur Bereitstellung von nicht umgesetzten Hydroxylgruppen in dem Produkt hergestellt wurden; Glyceridester von hydroxylierten Fettsäuren wie Rizinusöl, Glycerinmonoricinoleat, geblasenes Leinöl oder geblasenes Sojaöl; sowie Polyesterpolyole, wie sie beispielsweise durch Polymerisation eines Lactons wie ε-Caprolacton hergestellt wurden.

Polyisocyanate, welche mit Polyolen unter Bildung von isocyanatfunktionellen Vorpolymeren, die gemäß der Erfindung verwendet werden, umgesetzt werden können, können beliebige monomere, d. h. nicht-polymere, Isocyanatverbindungen mit wenigstens zwei freien Isocyanatgruppen sein einschließlich aliphatischen, cycloaliphatischen und aromatischen Verbindungen. Typische Vertreter von Polyisocyanaten umfassen — ohne Beschränkung hierauf: 2,4-Tolylendiisocyanat, 2,6-Tolylendiisocyanat, 4,4'-Diphenylmethandiisocyanat, m- und p-Phenylendiisocyanat, Polymethylenpoly(phenylisocyanat), Hexamethylendiisocyanat, 4,4'-Methylen-bis(cyclohexylisocyanat), Isophorondiisocyanat und andere aliphatische, cycloaliphatische und aromatische Polyisocyanate, einschließlich Mischungen solcher Polyisocyanate. Häufig werden cycloaliphatische und aromatische Polyisocyanate bevorzugt.

Hydroxyfunktionelle Verbindungen, welche zur Einführung olefinischer Unsättigung in die isocyanatfunktionellen Vorpolymere verwendet werden können, schließen ein — ohne Beschränkung hierauf —: Hydroxyethylacrylat, Hydroxyethylmethacrylat, Allylalkohol und Vinylalkohol.

Die elastomeren, polymeren Materialien auf Butadienbasis, welche bei der Durchführung der Erfindung verwendet werden können, sind ebenfalls an sich bekannt und können beliebige Elastomere sein, welche von 1,3-Butadien oder dessen halogenierten Derivaten abstammen und eine Einfriertemperatur unterhalb Umgebungstemperatur und vorzugsweise nicht oberhalb von 5 °C besitzen. Geeignete Elastomere umfassen Butadienhomopolymeres, Copolymeres von Butadien mit Styrol, Acrylnitril und Methacrylnitril und solche Homopolymere und Copolymere, welche durch Copolymerisation von Spurenmengen (0,05 bis 5 %) eines funktionellen Comonomeren hierin modifiziert wurden, beispielsweise mit Acrylsäure, Methacrylsäure, Maleinsäureanhydrid, Fumarsäure, Styrol und Methylmethacrylat.

Elastomere, polymere Materialien mit einer Einfriertemperatur unterhalb etwa 5 °C können zur Modifizierung der Flexibilität bei Zimmertemperatur der Klebstoffbindung der erfindungsgemäßen Klebstoffzusammensetzungen wirksam sein, und sie sind besonders günstig bei solchen Klebstoffzusammensetzungen, welche olefinisch ungesättigte Urethanreaktionsprodukte enthalten. Besonders bevorzugt von solchen Elastomeren sind Polychloroprenkautschuke, Polybutadienkautschuke, Butadiencopolymer-kautschuke wie Acrylnitrilbutadien-, carboxylierte Acrylnitril-butadien- und Styrol-butadienkautschuke ; Polyacrylatkautschuke wie Poly(ethylacrylat) und Poly(ethylacrylat-halogenierte-vinylether-acrylsäure)-kautschuke ; sowie Ethylencopolymere wie Ethylen-vinylacetatkautschuke. Andere elastomere Polymere mit einer Einfriertemperatur unterhalb von 5 °C können verwendet werden, da neben der niedrigen Einfriertemperatur keine anderen Beschränkungen hinsichtlich der Identität des Elastomeren gegeben sind, mit Ausnahme der spezifischen Erfordernisse der speziellen formulierten Klebstoffzusammensetzungen, beispielsweise einem geeigneten Molekulargewicht, Viskositätseigenschaften und Verträglichkeit mit den anderen Bestandteilen des Klebstoffes.

Polymere Materialien mit einer grundmolaren Viskositätszahl von 0,1 bis etwa 1,3, welche zur Verwendung gemäß der Erfindung geeignet sind, können durch Polymerisation von einem oder mehreren Acrylmonomeren und Nichtacrylmonomeren einschließlich von Mischungen hiervon erhalten werden. Beispiele für polymere Materialien umfassen : Poly(methylmethacrylat/n-butylacrylat/ethylacrylat) (90/5/5 %) ; Poly(n-butylmethacrylat/isobutylmethacrylat) (50/50 %) ; Poly(n-butylmethacrylat) und Poly(ethylmethacrylat). Vorzugsweise liegt die Viskosität etwa in der Mitte des zuvorgenannten Bereichs. Obwohl solche polymeren Materialien in beliebige Klebstoffe, wie sie gemäß der Erfindung hergestellt werden, eingegeben werden können, sind sie typischerweise in solchen Klebstoffzusammensetzungen besonders vorteilhaft, welche elastomere materialien auf Butadienbasis enthalten.

Phosphorhaltige Verbindungen, welche bei der Verwendung in den erfindungsgemäßen Klebstoffzusammensetzungen geeignet sind, werden aus der Gruppe ausgewählt, die aus Phosphorsäure und organischen Derivaten von Phosphinsäure, Phosphonsäure und Phosphorsäure abstammen, wobei diese organischen Derivate wenigstens eine organische Einheit besitzen, welche durch die Anwesenheit wenigstens einer funktionellen Gruppe, die vorzugsweise endständig angeordnet ist, aus gezeichnet ist. Solche organischen Derivate können gesättigt oder ungesättigt sein, und vorzugsweise weisen sie wenigstens eine organische Einheit auf, welche sich durch Anwesenheit wenigstens einer Einheit mit olefinischer Unsättigung auszeichnet. Besonders vorteilhaft besitzen solche phosphorhaltigen Verbindungen die charakteristischen Formeln :

$$X-R-\overset{\overset{\displaystyle O}{\|}}{\underset{\underset{\displaystyle OH}{|}}{P}}-R-X \qquad (I)$$

worin jeder Rest R gleich oder verschieden sein kann und unabhängig voneinander ein zweiwertiger, direkt an das Phosphoratom über eine Kohlenstoff-Phosphor-Bindung gebundener organischer Rest ist, wobei dieser zweiwertige Rest ein zweiwertiger, nichtsubstituierter organischer Rest oder ein zweiwertiger organischer Rest mit wenigstens einer Substituentengruppe in Form von Halogen, Hydroxyl, Amino, Alkylresten mit 1 bis 8 vorzugsweise 1 bis 4 Kohlenstoffatomen oder Arylresten mit wenigstens einer wenigstens einen aromatischen Ring enthaltenden Einheit ist, und worin jeder Rest X gleich oder verschieden sein kann und jeder Rest X unabhängig voneinander eine funktionelle Gruppe in Form von Wasserstoff, Hydroxyl, Amino, Mercapto, Halogen oder $CH_2=C<$ ist ; oder

$$X-R-\overset{\overset{\displaystyle O}{\|}}{\underset{\underset{\displaystyle OH}{|}}{P}}-O-R^1 \qquad (II)$$

worin die Reste R und X die zuvor angegebene Bedeutung besitzen und $R^1$ Wasserstoff oder $—R^2—X$ ist, worin $R^2$ ein zweiwertiger, direkt an den Sauerstoffrest über eine Kohlenstoff-Sauerstoff-Bindung gebundener organischer Rest ist und dieser zweiwertige Rest $R^2$ ein zweiwertiger nichtsubstituierter organischer Rest oder ein zweiwertiger organischer Rest ist, der wenigstens einen Substituenten in Form von Halogen, Hydroxyl, Amino, Alkylresten mit 1 bis 8, vorzugsweise 1 bis 4, Kohlenstoffatomen oder Arylresten mit wenigstens einer wenigstens einen aromatischen Ring enthaltenden Einheit aufweist, und der Rest X die zuvor angegebene Bedeutung besitzt, oder

$$R^1-O-\underset{OH}{\overset{O}{\overset{\|}{P}}}-O-R^1 \qquad (III)$$

worin der Rest $R^1$ die zuvor angegebene Bedeutung besitzt.

Eine bevorzugte Gruppe der phosphorhaltigen Verbindung besitzt folgende Formel :

$$(CH_2=\underset{R^3}{C}-\overset{O}{\overset{\|}{C}}-O-A)_m-\underset{OH}{\overset{O}{\overset{\|}{P}}}-(OR)_{2-m}\,, \qquad (IV)$$

worin der Rest $R^3$ Wasserstoff, Halogen, ein Alkylrest mit 1 bis 8, vorzugsweise 1 bis 4 Kohlenstoffatomen oder der Rest $CH_2{=}CH—$ ist, der Rest $R^4$ Wasserstoff, ein Alkylrest mit 1 bis 8, vorzugsweise 1 bis 4 Kohlenstoffatomen oder ein Halogenalkylrest mit 1 bis 8, vorzugsweise 1 bis 4 Kohlenstoffatomen ist, der Rest A $—R^5O—$ oder $(R^6O)_n$ ist, worin $R^5$ eine aliphatische oder cycloaliphatische Alkylengruppe mit 1 bis 9, vorzugsweise 2 bis 6 Kohlenstoffatomen ist, der Rest $R^6$ eine Alkylengruppe mit 1 bis 7, vorzugsweise 2 bis 4 Kohlenstoffatomen ist, n eine ganze Zahl von 2 bis 10 und $m = 1$ oder 2, vorzugsweise 1 bedeuten.

In mehreren Verbindungen der Formeln I bis IV können die zweiwertigen organischen Reste R und $R^2$ eine Verbindungsstruktur besitzen, d. h. der Rest kann wenigstens eine oder eine Reihe von wenigstens zwei nichtsubstituierten oder substituierten Kohlenwasserstoffgruppe/n aufweisen, welche die Gruppierungen —O—, —S—, —COO—, —NH—, —NHCOO— enthalten oder hierdurch voneinander getrennt sind, und sie können die Gruppierung $(R^7O)_p$, worin $R^7$ ein Alkylenrest mit 2 bis 7 und vorzugsweise 2 bis 4 Kohlenstoffatomen ist und p eine ganze Zahl von 2 bis 10 bedeutet, enthalten. Vorzugsweise ist der zweiwertige Rest ein Alkylenrest mit einer geraden Kette oder Ring mit 1 bis 22 und vorzugsweise 1 bis 9 Kohlenstoffatomen in irgendeiner sich nicht wiederholenden Einheit. Es sei darauf hingewiesen, daß zweiwertige Reste mit Verbindungsstruktur zwei oder mehr solcher geraden Ketten oder Ringe besitzen würden. Die zweiwertigen Reste können gesättigt oder ungesättigt, aliphatisch, cycloaliphatisch oder aromatisch sein, und sie können bei Verbindungsstrukturen Mischungen hiervon einschließen, und besitzen im allgemeinen von 1 bis etwa 22 Kohlenstoffatome in jeder Kette oder jedem Ring von Kohlenstoffatomen.

Bei mehreren der Verbindungen der Formeln I bis III umfassen die angegebenen Gruppierungen X—R— und $X—R^2—$ — ohne Beschränkung hierauf — niedere Alkenyl-, Cyclohexenyl-, Hydroxyniederalkenyl-, Halogen-niederalkenyl-, Carboxy-niederalkenyl-, Niederalkyl-, Amino-niederalkyl-, Hydroxy-niederalkyl-, Mercapto-niederalkyl-, Alkoxy-niederalkyl-, Halogen-niederalkyl-, Diphosphonomethylamino-niederalkyl-, Phenylhydroxy-phosphonomethyl-, Aminophenyl-hydroxyphosphonomethyl-, Halogenphenyl-hydroxy-phosphonomethyl-, Phenyl-amino-phosphonomethyl-, Halogenphenyl-amino-phosphonomethyl-, Hydroxy-phosphonomethyl-, Niederalkyl-hydroxy-phosphonomethyl-, Halogen-niederalkyl-hydroxy-phosphonomethyl- und Amino-niederalkyl-hydroxyphosphonomethylreste, wobei der Ausdruck « nieder » sich auf einen Rest mit 1 bis 8 und vorzugsweise 1 bis 4 Kohlenstoffatomen bezieht.

Phosphorhaltige Verbindungen mit Vinylunsättigung sind gegenüber solchen Verbindungen mit Allylunsättigung bevorzugt, wobei Monoester von Phosphinsäure, Phosphonsäure und Phosphorsäure, die eine Einheit an Vinylunsättigung oder Allylunsättigung und insbesondere an Vinylunsättigung aufweisen, derzeit bevorzugt sind. Repräsentative phosphorhaltige Verbindungen umfassen — ohne Beschränkung hierauf — : Phosphorsäure, 2-Methacryloyloxyethylphosphat, Bis-(2-methacryloyloxyethyl)-phosphat, 2-Acryloyloxyethylphosphat, Bis-(2-acryloyloxyethyl)-phosphat, Methyl-(2-methacryloyloxyethyl)-phosphat, Ethylmethacryloyloxyethylphosphat, Methylacryloyloxyethyl-phosphat, Ethylacryloyloxyethylphosphat, Verbindungen der Formel IV, worin $R^3$ ein Wasserstoffatom oder der Methyl-rest und $R^4$ ein Propyl-, Isobutyl, Ethylhexyl-, Halogenpropyl-, Halogenisobutyl- oder Halogenethylhexylrest ist ; Vinylphosphonsäure, Cyclohexen-3-phosphonsäure, alpha-Hydroxybuten-2-phosphonsäure, 1-Hydroxy-1-phenylmethan-1,1-diphosphonsäure, 1-Hydroxy-1-methyl-1,1-diphosphonsäure, 1-Amino-1-phenyl-1,1-diphosphonsäure, 3-Amino-1-hydroxypropan-1,1-diphosphonsäure, Amino-tris(methylenphosphonsäure), gamma-Aminopropylphosphonsäure, gamma-Glycidoxypropylphosphonsäure, Phosphorsäure-mono-2-aminoethylester, Allylphosphonsäure, Allylphosphinsäure, β-Methacryloyloxyethylphosphinsäure, Diallylphosphinsäure, Bis-(β-methacryloyloxyethyl)-phosphinsäure und Allylmethacryloxyloxyethylphosphinsäure.

Die in den erfindungsgemäßen Klebstoffsystemen verwendeten, bei Zimmertemperatur reaktionsfähigen Redoxkuppelkatalysatorsysteme sind an sich bekannt und müssen daher nicht im einzelnen erläutert werden. Grundsätzlich umfassen solche systeme wenigstens ein Oxidationsmittel und wenigstens ein Reduktionsmittel, welche bei Zimmertemperatur miteinander unter Bildung von freien Radikalen reagieren können, die bei den erfindungsgemäßen Klebstoffen wirksam sind, um die Additionspolymerisationsreaktionen zu initiieren. Im wesentlichen können beliebige der bekannten Oxidationsmittel und Reduktionsmittel, welche auf diese Weise miteinander reagieren, bei der Durchführung der Erfindung eingesetzt werden. Repräsentative Oxidationsmittel umfassen — ohne Beschränkung hierauf — : organische Peroxide wie Benzoylperoxid und andere Diacylperoxide, Hydroperoxide wie Cumolhydroperoxid, Perester wie t-Butylperoxybenzoat, Ketonhydroperoxide wie Methylethylketon, organische Salze von Übergangsmetallen wie Kobaltnaphthenat und Verbindungen, welche ein labiles Chloratom enthalten wie Sulfonylchlorid. Repräsentative Beispiele für Reduktionsmittel umfassen — ohne Beschränkung hierauf — : Sulfinsäuren und deren anorganische Salze, Azoverbindungen wie Azoisobuttersäuredinitril, alpha-Aminosulfone wie Bis-(tolyl-sulfonmethyl)-amin, Bis-(tolylsulfonmethyl)-ethylamin und Bis-(tolylsulfonmethyl)-benzylamin, tertiäre Amine wie Diisopropyl-p-toluidin, Dimethylanilin und Dimethyl-p-toluidin, sowie Amin-aldehydkondensationsprodukte, z. B. die Kondensationsprodukte von aliphatischen Aldehyden wie Butyraldehyd mit primären Aminen wie Anilin oder Butylamin. Die Verwendung von bekannten Beschleunigern oder Promotoren mit den Redoxkuppelkatalysatorsystemen kann vorteilhaft sein.

Da die Klebstoffsysteme bei Zimmertemperatur aushärtbar sind, werden sie typischerweise in Form von aus zwei Teilen bestehenden Systemen angeliefert, wobei das Oxidationsmittel vorzugsweise von dem Teil getrennt ist, welcher das olefinisch ungesättigte Urethanreaktionsprodukt und/oder das elastomere, polymere Material auf Butadienbasis enthält. In den meisten Fällen wird die phosphorhaltige Verbindung in dem Teil aufgelöst oder dispergiert, welcher das olefinisch ungesättigte Urethanreaktionsprodukt und/oder das elastomere, polymere Material auf Butadienbasis enthält. Dieser letztgenannte Teil enthält vorzugsweise das Reduktionsmittel des Redoxkuppelkatalysatorsystems. Jedoch ist es in einigen Fällen vorteilhaft, die phosphorhaltige Verbindung in den Teil bzw. Packungsteil einzugeben, welcher das Oxidationsmittel enthält. In allen Fällen enthält der das Oxidationsmittel enthaltende Teil unabhängig von der Anwesenheit oder dem Fehlen der phosphorhaltigen Verbindung einen Träger, der in der Lage ist, das Oxidationsmittel und die — falls vorliegend — phosphorhaltige Verbindung als stabile Lösung oder Dispersion zu halten.

Die Träger, welche zur Verwendung bei den erfindungsgemäß eingesetzten Haftaktivatoren geeignet sind, können ein einfaches inertes Lösungsmittel oder Verdünnungsmittel sein wie Methylenchlorid oder Butylbenzylphthalat, wobei Mischungen solcher Lösungsmittel oder Verdünnungsmittel eingeschlossen sind. Der Träger sollte nicht mehr als 5 Gew.-% an irgendeinem Material oder an Einheiten enthalten, welche mit dem Oxidationsmittel bei Zimmertemperatur reaktionsfähig sind. Der Träger kann ein stärker komplexes Gemisch sein, einschließlich wenigstens einem filmbildenden Bindemittel zusätzlich zu dem inerten Lösungsmittel oder Verdünnungsmittel. In diesem Fall ist das filmbildende bindemittel vorzugsweise im wesentlichen inert gegenüber dem Oxidationsmittel, das in der « Primerzusammensetzung » vorliegt. Ein besonders bevorzugter Träger umfaßt wenigstens ein filmbildendes Bindemittel und es ist eine Mischung, welche etwa 0,05 bis etwa 50 Gew.-% an (1) wenigstens einem standardmäßigen, organischen, polymeren, filmbildenden Bindemittel mit einer Einfriertemperatur im Bereich von etwa 0 °C bis etwa 150 °C oder (2) wenigstens einen Polymer-in-Monomer-Sirup, wie er zuvor beschrieben wurde, und von etwa 40 bis etwa 99 Gew.-% von wenigstens einem organischen Lösungsmittel enthält, das das filmbildende Bindemittel, die phosphorhaltige Verbindung, wenn sie in die Klebeaktivatorzusammensetzung eingegeben ist, und Oxidationsmittel als stabile Lösung oder Dispersion zu halten vermag. Als Beispiele für polymere, filmbildende Bindematerialien, welche in dem Träger verwendet werden können, seien ohne Beschränkung hierauf genannt: Polyalkylacrylate und -methacrylate sowie Copolymere hiervon, Polystyrol und Copolymere hiervon, Vinylpolymere und -copolymere, Polyester, Polyketone, Polysulfone, Phenolharze, Polyvinylbutyrale und Polycarbonate. Der Träger kann zusätzlich zu dem Lösungsmittel oder dem Lösungsmittel plus filmbildenden Bindemittel Zusätze wie äußere Weichmacher, Flexibilität bewirkende Zusätze, Suspensionshilfsmittel und Stabilisatoren enthalten, vorausgesetzt, daß irgendwelche dieser Zusätze die Stabilität der Aktivatorzusammensetzung nicht in unannehmbarer Weise negativ beeinträchtigen.

Die Verwendung von 0,01 bis 10 und vorzugsweise von 0,5 bis 5 Gew.-% der polymerisierbaren Klebstoffmaterialien an bestimmten tertiären Aminen der folgenden Formel V

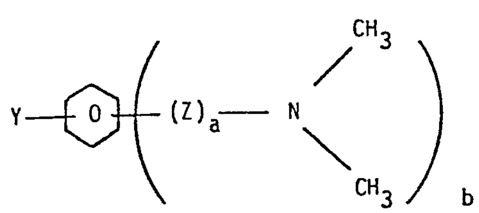

worin Z eine Methylengruppe, Y ein Wasserstoffatom, ein Hydroxy-, Amino-, Halogen-, Alkylrest mit 1 bis 8 und vorzugsweise 1 bis 4 Kohlenstoffatomen oder ein Alkoxyrest mit 1 bis 8 und vorzugsweise 1 bis 4 Kohlenstoffatomen ist, a = 0 oder 1 und b = 1 oder 2 bedeuten, ist zur Beschleunigung der Aushärtung

der hier beschriebenen Klebstoffzusammensetzungen bei Zimmertemperatur wirksam. Besonders bevorzugte Aushärtbeschleuniger in Form von tertiären Aminen sind N,N-Dimethylanilin und N,N-Dimethylaminomethylphenol.

Die Beständigkeit der hier beschriebenen Klebstoffsysteme gegenüber Umwelteinflüssen kann durch Zugabe von etwa 0,005 bis etwa 15 und vorzugsweise von etwa 0,1 bis etwa 10 Gew.-%, bezogen auf das Gesamtgewicht der polymerisierbaren Klebstoffzusammensetzung, eines Gemisches eines Metallmolybdates ausgewählt aus der aus Zinkmolybdat, Kalziummolybdat, Bariummolybdat, Strontiummolybdat und Mischungen hiervon bestehenden Gruppe, und eines Metallphosphates, ausgewählt aus der aus Zinkphosphat, Kalziumphosphat, Magnesiumphosphat und Mischungen hiervon bestehenden Gruppe, verbessert werden, wobei das Metallmolybdat in einer Menge, bezogen auf Volumenkonzentration, von etwa 1 bis etwa 3 Teilen, vorzugsweise 2 bis 3 Teilen auf 1 Teil des Metallphosphates vorhanden ist. Solche Mischungen einschließlich ihrer Herstellung sind im einzelnen in der US-Patentschrift 4 017 315 beschrieben, auf welche hiermit Bezug genommen wird.

Polybasische Bleisalze von Phosphorsäure und gesättigten und ungesättigten organischen Dicarbonsäuren und dicarbonsäureanhydriden, insbesondere dibasisches Bleiphthalat, tribasisches Bleimaleatmonohydrat, tetrabasisches Bleifumarat, dibasisches Bleiphosphit und Mischungen hiervon, und Zinkoxid, in einer Menge im Bereich von etwa 0,1 bis etwa 15 und vorzugsweise etwa 1 bis etwa 10 Gew.-%, bezogen, auf das Gesamtgewicht der polymerisierbaren klebstoffzusammensetzung, sind ebenfalls zur Verbesserung der Beständigkeit gegenüber Umwelteinflüssen wirksam.

Andere üblicherweise in Klebstoffzusammensetzungen verwendete Zusätze wie Füllstoffe, Pigmente und dergleichen können zu den hier beschriebenen Klebstoffsystemen zugesetzt werden. Die Zugabe von fein zerkleinerten verstärkenden Fasern wie gechoppten oder gemahlenen Glasfasern, Kohlenstoffasern, Borfasern oder Aromidfasern hat sich als besonders wirksam zur Verbesserung der Haftfestigkeit, der Hitzebeständigkeit und der Beständigkeit gegenüber thermischem Abbau herausgestellt.

Die Grundklebstoffzusammensetzungen, Abbindebeschleuniger und Klebstoffprimerzusammensetzungen werden nach konventionellen Methoden hergestellt, wie sie z. B. in den US-Patentschriften 3 832 274 und 3 890 407 beschrieben sind.

Die erfindungsgemäßen Klebstoffsysteme können zum Verkleben von Metalloberflächen wie Stahl, Aluminium und Kupfer, mit einer Vielzahl von Unterlagen einschließlich Metallen, Kunststoffen und anderen Polymeren, Fasern, Glas, Keramikprodukten, Holz und dergl. verwendet werden. Die Klebstoffsysteme können als Mehrfachpackungsklebstoffsysteme eingesetzt werden, in denen ein Teil bzw. eine Packung die polymerisierbare Klebstoffzusammensetzung und ein zweiter Teil oder eine zweite Packung die hier beschriebenen Abbindebeschleuniger enthält. Alternativ kann der Abbindebeschleuniger als Primersystem verwendet werden. Bei der Verwendung als aus mehreren Teilen bestehenden System werden eine oder beide der miteinander zu verbindenden Oberflächen mit dem Klebstoffsystem beschichtet, das durch Vermischen der Einzelteile erhalten wurde, und die Oberflächen werden in Kontakt miteinander gebracht. Bei dem Primersystem wird die Primerzusammensetzung oder der Abbindeaktivator zuerst auf eine oder auf beide der zu verbindenden Oberflächen aufgebracht, und die Klebstoffharzmasse, welche die polymerisierbare Klebstoffzusammensetzung enthält, wird auf wenigstens eine der Oberflächen aufgebracht, diese werden dann miteinander in Kontakt gebracht. Im allgemeinen Fall ist die Anwendung des Primersystems bequemer durchzuführen.

Ein besonderes Merkmal der Erfindung ist es, daß die hier beschriebenen Klebstoffzusammensetzungen zum Verbinden von Metallunterlagen wie aus Stahl, Aluminium und Kupfer mit nur — falls überhaupt — geringer Vorbehandlung der Metalloberfläche vor dem Auftrag des Primers oder des Klebstoffes, welche Anwendungsart auch gewählt wird, verwendet werden können. Auf diese Weise kann das Verkleben selbst an öligen Metalloberflächen, welche sonst sauber sind, ohne eine übermäßige Vorbehandlung durchgeführt werden, wie diese üblicherweise mit der überwiegenden Anzahl der derzeit erhältlichen Primer und Klebstoffe erforderlich ist. Zusätzlich ergeben die erfindungsgemäßen Klebstoffsysteme ein Abbinden bei Zimmertemperatur, so daß keine Hitze zum Auftrag des Klebstoffsystems auf die Unterlagen oder für das Aushärten erforderlich ist. Sie können ebenfalls auf porösen Unterlagen verwendet werden, dies im Gegensatz zu den anaeroben Klebstoffen, welche den Ausschluß von Luft erfordern und daher nicht auf Luft in den Poren enthaltenden Oberflächen verwendet werden können.

Die Erfindung wird im folgenden anhand von Beispielen näher erläutert, worin sich alle Angaben in Teilen, Verhältnissen und Prozentsätzen auf Gewicht beziehen, falls nichts anderes angegeben ist.

Beispiel 1

Es wurde ein Klebstoffharz, im folgenden als AR-I bezeichnet, durch Umsetzung von 1,0 mol Polycaprolactontriol mit einem Durchschnittsmolekulargewicht von 540, 0,65 mol Polycaprolactondiol mit einem Durchschnittsmolekulargewicht von 2 000 und 4,3 mol Toluoldiisocyanat in Anwesenheit einer katalytischen Menge von Dibutylzinndilaurat und Methylmethacrylatverdünnungsmittel, bis sämtliche Hydroxygruppen umgesetzt worden waren, hergestellt, dies ergab ein isocyanatfunktionelles Urethanvorpolymeres, das in dem Methylmethacrylatverdünnungsmittel gelöst war. Zu dem Reaktionsgemisch wurden 4,3 mol Hydroxyethylacrylat zugesetzt, und die Reaktion wurde fortgeführt, bis sämtliche

Isocyanateinheiten umgesetzt worden waren, dies ergab ein acryliertes Polyurethanharz AR-I mit 65 % Harzfeststoffen in Methylmethacrylatmonomerem (MMA) als Verdünnungsmittel.

Beispiel 2

Es wurden Klebstoffsysteme in konventioneller Weise mit den folgenden Zusammensetzungen, die in Gewichtsteilen angegeben sind, hergestellt :

| Klebstoffzusammensetzung | II-1 | II-2 |
|---|---|---|
| AR-I (Bsp. 1 mit 65 % AR-I in MMA) | 23,8 | 23,8 |
| Carboxyliertes Poly(1,3-butadien/acrylnitril)-elastomeres | 11,4 | 11,4 |
| 2-Methacryloyloxyethylphosphat | 4,2 | 4,2 |
| Methacrylsäure | 7,6 | 0,0 |
| Methylmethacrylat | 41,6 | 41,6 |
| Calciummolybdat (3 Vol.)/Zinkphosphat (2 Vol.) | 4,3 | 4,3 |
| Dimethylanilin | 1,8 | 1,8 |
| Diisopropanol-p-toluidin | 1,3 | 1,3 |
| Kieselerde | 5,0 | 5,0 |

Nach dem Vermischen der Inhaltsstoffe zur Herstellung homogener Zusammensetzungen wurden die Klebstoffe zum Metallkleben Stahl/Stahl (SAE 1010 kaltgewalzter Stahl) eingesetzt. Die vollständig vermischten Klebstoffe wurden auf eine der zu verklebenden Oberflächen aufgebracht, und eine zweite nichtbeschichtete, zu verklebende Oberfläche wurde auf den Klebstoff zur Herstellung der Testverbindungen aufgepreßt. Die Gesamtstärke der Klebstoffschicht betrug etwa 0,5 mm für jeden Testzusammenbau. Die Teststücke wurden bei Zimmertemperatur während 12 Stunden ausgehärtet, die Hälfte der Stücke wurden anschließend einem Nacheinbrennen während 30 Minuten bei 204 °C unterzogen. Es wurden Spaltschertests bzw. Überlappschertests (lap shear tests) bei Zimmertemperaturen bei 204 °C an den ausgehärteten Zusammenbauten entsprechend der US-Norm ASTM D-1002-72 durchgeführt. Die Testergebnisse in Megapascal sind in der Tabelle II aufgeführt :

Tabelle II

| Klebstoff | II-1 | II-2 |
|---|---|---|
| Spaltscherfestigkeit bei Zimmertemperatur, ohne Einbrennen | 31,1 | 34,5 |
| Spaltscherfestigkeit bei Zimmertemperatur, mit Nacheinbrennen | 9,7 + | 33,1 ++ |
| Spaltscherfestigkeit bei 204 °C, nach Nacheinbrennen | 0,07 | 0,07 |

+ Starkes Gasen. ++ Kein Gasen.

Diese Werte zeigen eindeutig die Verbesserung der Haftfestigkeit und der Beständigkeit gegenüber thermischem Abbau, wenn das Klebstoffsystem keine Säure, spezifischerweise Methacrylsäure, enthält außer den Säurewerten, welche in dem elastomeren, polymeren, carboxylierten Butadien-Acrylnitrilmaterial vorhanden sind.

Beispiel 3

Die Klebstoffzusammensetzungen II-1 und II-2 von Beispiel 2 wurden zur Herstellung der folgenden Klebstoffformulierungen verwendet :

| Formulierung | III-1 | III-2 | III-3 | III-4 | III-5 |
|---|---|---|---|---|---|
| Klebstoff II-1 von Bsp. 2 | 100 | — | — | — | — |
| Klebstoff II-2 von Bsp. 2 | — | 100 | 100 | 100 | 100 |
| Gemahlene Glasfasern | — | — | 20 | 50 | 100 |

Die Klebstoffe II-1 und II-2 von Beispiel 2 ohne verstärkenden Füller wurden als Vergleichsproben verwendet. Jeder der Klebstoffe wurde entsprechend der Arbeitsweise von Beispiel 2 zum Verkleben von handelsüblichem kaltgewalztem Stahl der Qualität 1 010 eingesetzt. Spaltschertests bei Zimmertemperatur und bei 204 °C wurden entsprechend der Arbeitsweise von Beispiel 2 durchgeführt. Die Testergebnisse in Megapascal sind in Tabelle III aufgeführt.

Tabelle III

| Klebstoff | III-1 | III-2 | III-3 | III-4 | III-5 |
|---|---|---|---|---|---|
| Spaltscherung bei Zimmertemperatur ohne Nacheinbrennen | 19,1 | 14,6 | 22,9 | 22,5 | 15,7 |
| Spaltscherung bei Zimmertemperatur mit Nacheinbrennen | 9,2 | 16,1 | 14,4 | 16,7 | 14,1 |
| Spaltscherung bei 204 °C mit Nacheinbrennen | 0,12 | 0,04 | 0,13 | 0,26 | 0,23 |

Diese Werte zeigen, daß die Zugabe von verstärkenden Füllstoffen in die erfindungsgemäßen Klebstoffzusammensetzungen das Verhalten bei erhöhter Temperatur zu verbessern vermag.

Beispiel 4

Die Klebstoffzusammensetzungen II-1 und II-2 von Beispiel 2 wurden zur Herstellung der folgenden Klebstoffformulierungen verwendet :

| Formulierung | IV-1 | IV-2 | IV-3 | IV-4 | IV-5 | IV-6 | IV-7 | IV-8 | IV-9 |
|---|---|---|---|---|---|---|---|---|---|
| Klebstoff II-1 von Bsp. 2 | 100 | — | — | — | — | — | — | — | — |
| Klebstoff II-2 von Bsp. 2 | — | 100 | 100 | 100 | 100 | 100 | 100 | 100 | 100 |
| Gemahlene Glasfaser | — | — | — | 20 | — | 20 | 100 | 100 | 100 |
| Trimethylolpropantriacrylat | — | — | 6 | 6 | 12 | 12 | 2 | 4 | 7 |

Die Klebstoffe II-1 und II-2 von Beispiel 2 wurden als Vergleichsproben verwendet. Jeder der Klebstoffe wurde zum Verkleben von handelsüblichem kaltgewalztem Stahl üblicher Qualität und kaltgewalztem Stahl SAE 1 010 entsprechend der Arbeitsweise von Beispiel 2 verwendet. Spaltschertests bei Zimmertemperatur und bei 204 °C wurden entsprechend der Arbeitsweise von Beispiel 2 durchgeführt, wobei die Ergebnisse in Tabelle IV aufgeführt sind.

Diese Daten bestätigen weiter die beträchtliche Verbesserung der Beständigkeit gegenüber thermischem Abbau, welcher durch die Acrylstrukturklebstoffe der Erfindung erreicht wird. Die Werte zeigen, daß die Verwendung von Polyacrylaten mit wenigstens zwei acrylfunktionellen Gruppen nicht nur in signifikanter Weise die Beständigkeit gegenüber thermischem Abbau, sondern auch in signifikanter Weise die Haftung bei erhöhten Temperaturen verbessern.

Tabelle IV

| Klebstoff | Kaltgewalzter Stahl, Sorte | Spaltscherfestigkeit Zimmertemp. kein Nacheinbrennen | Zimmertemp. mit Nacheinbrennen | (Megapascal) 204 °C mit Nacheinbrennen |
|---|---|---|---|---|
| 1 | kommerziell | 19,0 | 9,2 | 0,12 |
| 2 | kommerziell | 14,6 | 16,1 | 0,04 |
| 3 | kommerziell | 13,6 | 18,2 | 0,77 |
| 4 | kommerziell | 16,0 | 20,7 | 0,88 |
| 5 | kommerziell | 13,4 | 16,0 | 0,51 |
| 6 | kommerziell | 13,4 | 17,7 | 0,95 |
| 7 | kommerziell | 17,9 | 15,7 | 0,49 |
| 8 | kommerziell | 18,9 | 15,2 | 0,44 |
| 9 | kommerziell | 18,8 | 14,8 | 0,88 |
| 1 | SAE | — | — | — |
| 2 | SAE | — | — | — |
| 3 | SAE | 28,9 | 23,2 | 0,62 |
| 4 | SAE | 26,8 | 22,0 | 0,97 |
| 5 | SAE | 26,4 | 22,0 | 1,08 |

(Fortsetzung)

| Klebstoff | Kaltgewalzter Stahl, Sorte | Spaltscherfestigkeit Zimmertemp. kein Nacheinbrennen | Zimmertemp. mit Nacheinbrennen | (Megapascal) 204 °C mit Nacheinbrennen |
|---|---|---|---|---|
| 6 | SAE | 26,4 | 23,5 | 1,07 |
| 7 | SAE | — | — | — |
| 8 | SAE | — | — | — |
| 9 | SAE | — | — | — |

Beispiel 5

Es wurde die folgende aus zwei Teilen bestehende Primerzusammensetzung hergestellt, die Mengen sind in Gewichtsteilen angegeben.

| Bestandteil | Teil A | Teil B |
|---|---|---|
| Polymethylenpoly(phenylisocyanat) | 16,0 | — |
| Hexakismethoxymelaminaminoharz | — | 1,0 |
| Dibutylzinndilaurat | — | 0,15 |
| Methylenchlorid | 84,0 | 98,85 |

Die folgenden Acrylmontageklebstoffe wurden hergestellt, wobei die Mengen in Gewichtsteilen angegeben sind :

| Formulierung | V-1 | V-2 | V-3 |
|---|---|---|---|
| Klebstoff II-1 von Bsp. 2 | 100 | — | — |
| Klebstoff II-2 von Bsp. 2 | — | 100 | 100 |
| Kieselerde | — | 5 | 5 |
| Trimethylolpropantriacrylat | — | 6 | 12 |
| Gemahlene Glasfasern | — | 20 | — |

Die einzelnen Teile A und B der Primerzusammensetzung wurden vermischt und auf mit Glasfasern verstärktes Kunststoffmaterial auf Polyesterbasis aufgetragen. Das Kunststoffmaterial wurde mit 2,5 µm Dicke des nassen Filmes des Primers beschichtet, dieser wurde 30 Minuten bei Umgebungsbedingungen von Temperatur und Feuchtigkeit trocknen gelassen. Das Kunststoffmaterial wurde mit Teilen aus kaltgewalztem Stahl handelsüblicher Qualität verklebt, diese waren mit einem der Klebstoffe V-1, V-2 und V-3 in einer Dicke von 0,5 mm beschichtet worden. Die Zusammenbauten aus Kunststoff/Stahl wurden verklebt und entsprechend der Arbeitsweise von Beispiel 2 mit der Ausnahme getestet, daß die Temperatur des Nacheinbrennens 138 °C betrug. Die Ergebnisse sind in der folgenden Tabelle V zusammengestellt.

Tabelle V

| Klebstoff | V-1 | V-2 | V-3 |
|---|---|---|---|
| Spaltschertest bei Zimmertemperatur, kein Nacheinbrennen | 6,6 | 6,8 | 7,3 |
| Spaltschertest bei Zimmertemperatur, mit Nacheinbrennen | 5,2 | 6,7 | 5,7 |
| Spaltschertest bei 204 °C mit Nacheinbrennen | 0,05 | 0,08 | 0,08 |

Die Werte zeigen die Verbesserungen beim Verhalten bei erhöhter Temperatur und der Beständigkeit gegenüber thermischem Abbau der erfindungsgemäßen Klebstoffe bei Anwendungen zum Verkleben von Kunststoffen mit Metallen.

Beispiel 6

Es wurden ähnliche Ergebnisse erzielt, d. h. signifikante Verbesserungen beim Verhalten bei erhöhter Temperatur und verbesserter Beständigkeit gegenüber thermischem Abbau, wenn verzinkter Stahl, Aluminium und nicht mit Primer bestrichene Kunststoffmaterialien verklebt wurden.

**Ansprüche**

1. Bei Zimmertemperatur härtbares Klebstoffsystem, dadurch gekennzeichnet, daß es umfaßt :

A. als polymerisierbare Klebstoffzusammensetzung ein Gemisch aus

a) von etwa 10 bis etwa 90 Gew.-% wenigstens eines polymerisierbaren Materials in Form von Styrol, Methylmethacrylat, Ethylmethacrylat, n-Butylmethacrylat, Isobutylmethacrylat, t-Butylmethacrylat, Hexylmethacrylat, Ethylhexylmethacrylat, einem teilweise polymerisierten Sirup von einem oder mehreren dieser Monomeren, wobei ein solcher Sirup sowohl Polymeres als auch nichtpolymerisiertes Monomeres enthält, oder Mischungen hiervon,

b) von etwa 10 bis etwa 90 Gew.-% wenigstens eines Reaktionsproduktes wenigstens eines isocyanatfunktionellen Vorpolymeren und wenigstens eines hydroxyfunktionellen Monomeren, das wenigstens eine Einheit an polymerisierbarer, olefinischer Unsättigung aufweist, wobei ein solches Reaktionsprodukt durch die Anwesenheit von wenigstens zwei Einheiten an olefinischer Unsättigung und die praktische Abwesenheit von freien Isocyanatgruppen ausgezeichnet ist,

c) von 0 bis etwa 20 Gew.-% wenigstens eines polymerisierbaren, olefinisch ungesättigten Monomeren, wobei die Menge dieses Monomeren zusätzlich zu der Menge irgendeines solchen Monomeren, wie es unter A.a) verwendet wird, vorliegt,

d) von 0 bis etwa 40 Gew-% wenigstens eines elastomeren, polymeren Materials mit einer Einfriertemperatur unterhalb etwa 5 °C,

wobei die jeweiligen Prozentsätze von a) bis d) sich auf das Gesamtgewicht von a) bis d) beziehen,

e) eine effektive Menge wenigstens einer phosphorhaltigen Verbindung der folgenden Formeln :

$$X - R - \overset{\overset{\displaystyle O}{\|}}{\underset{\underset{\displaystyle OH}{|}}{P}} - R - X \qquad (I)$$

worin jeder Rest R gleich oder verschieden sein kann und unabhängig voneinander ein zweiwertiger, direkt an das Phosphoratom über eine Kohlenstoff-Phosphor-Bindung gebundener organischer Rest ist, wobei dieser zweiwertige Rest ein zweiwertiger, nichtsubstituierter organischer Rest oder ein zweiwertiger organischer Rest mit wenigstens einer Substituentengruppe in Form von Halogen, Hydroxyl, Amino, Alkylresten mit 1 bis 8 Kohlenstoffatomen oder Arylresten mit wenigstens einer wenigstens einen aromatischen Ring enthaltenden Einheit ist, und worin jeder Rest X gleich oder verschieden sein kann und jeder Rest X unabhängig voneinander eine funktionelle Gruppe in Form von Wasserstoff, Hydroxyl, Amino, Mercapto, Halogen oder CH=C< ist ; oder

$$X - R - \overset{\overset{\displaystyle O}{\|}}{\underset{\underset{\displaystyle OH}{|}}{P}} - O - R^1 \qquad (II)$$

worin die Reste R und X die zuvor angegebene Bedeutung besitzen und $R^1$ Wasserstoff oder $—R^2—X$ ist, worin $R^2$ ein zweiwertiger, direkt an den Sauerstoffrest über eine Kohlenstoff-Sauerstoff-Bindung gebundener organischer Rest ist und dieser zweiwertige Rest $R^2$ ein zweiwertiger nichtsubstituierter organischer Rest oder ein zweiwertiger organischer Rest ist, der wenigstens einen Substituenten in Form von Halogen, Hydroxyl, Amino, Alkylresten mit 1 bis 8 Kohlenstoffatomen oder Arylresten mit wenigstens einer wenigstens einen aromatischen Ring enthaltenden Einheit aufweist, und der Rest X die zuvor angegebene Bedeutung besitzt, oder

$$R^1 - O - \overset{\overset{\displaystyle O}{\|}}{\underset{\underset{\displaystyle OH}{|}}{P}} - O - R^1 \qquad (III)$$

worin der Rest $R^1$ die zuvor angegebene Bedeutung besitzt,

f) eine wirksame Menge wenigstens eines Reduktionsmittels,

g) von 0 bis etwa 10 Gew.-% der polymerisierbaren Klebstoffzusammensetzung wenigstens eines tertiären Amins der folgenden Formel

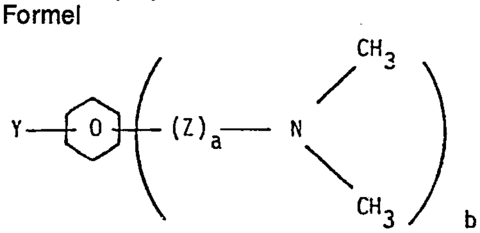

(V)

worin Z eine Methylengruppe ist, Y Wasserstoff, Hydroxy, Amino, Halogen, einen Alkylrest mit 1 bis 8 Kohlenstoffatomen oder einen Alkoxyrest, worin die Alkyleinheit 1 bis 8 Kohlenstoffe besitzt, bedeutet, a = 0 oder 1 ist und b = 1 oder 2 ist,

h) von 0 bis etwa 15 Gew.-% der polymerisierbaren Klebstoffzusammensetzung einer Mischung eines Metallmolybdates in Form von Zinkmolybdat, Kalziummolybdat, Bariummolybdat, Strontiummolybdat oder Mischungen hiervon und eines Metallphosphates in Form von Zinkphosphat, Kalziumphosphat, Magnesiumphosphat oder Mischungen hiervon, wobei dieses Metallmolybdat in einer Menge, bezogen auf Volumenkonzentration, von etwa 2 bis etwa 3 Teilen pro Teil des Metallphosphates vorhanden ist, und

i) von 0 bis etwa 15 Gew.-% der polymerisierbaren Klebstoffzusammensetzung wenigstens einer Verbindung in Form von polybasischen Bleisalzen von Phosphorsäure, polybasischen Bleisalzen von gesättigten organischen Dicarbonsäuren und -säureanhydriden, polybasischen Bleisalzen von ungesättigten organischen Dicarbonsäuren und -säureanhydriden, Zinkoxid oder Mischungen hiervon, wobei die Prozentsätze von a) bis d) 100 weniger der kombinierten Prozentsätze von e) bis i) ausmachen, und

B. als Abbindebeschleuniger eine wirksame Menge wenigstens eines Oxidationsmittels, wobei das Oxidationsmittel bei Zimmertemperatur mit dem Reduktionsmittel unter Bildung von freien Radikalen reaktiv ist, welche zur Initiierung der Additionspolymerisation der polymerisierbaren Klebstoffzusammensetzung wirksam sind.

2. Klebstoffsystem nach Anspruch 1, dadurch gekennzeichnet, daß die phosphorhaltige Verbindung in einer Menge im Bereich von etwa 0,1 bis etwa 20 Gew.-%, bezogen auf die polymerisierfähige Klebstoffzusammensetzung, vorhanden ist, das Reduktionsmittel in einer Menge im Bereich von etwa 0,05 bis etwa 10 Gew.-%, bezogen auf polymerisierfähige Klebstoffzusammensetzung, vorhanden ist, das Oxidationsmittel in einer Menge im Bereich von etwa 0,5 bis etwa 30 Gew.-% des Abbindebeschleunigers vorhanden ist, und der Abbindebeschleuniger von etwa 40 bis etwa 99,5 Gew.-% eines Trägers, der wenigstens ein inertes, organisches Verdünnungsmittel umfaßt, enthält, wobei dieser Träger in der Lage ist, das Oxidationsmittel als stabile Lösung oder Dispersion zu halten.

3. Klebstoffsystem nach Anspruch 2, dadurch gekennzeichnet, daß das tertiäre Amin der Formel (V) in einer Menge im Bereich von etwa 0,01 bis etwa 10 Gew.-% vorhanden ist.

4. Klebstoffsystem nach Anspruch 2, dadurch gekennzeichnet, daß der Abbindebeschleuniger von etwa 0,05 bis etwa 50 Gew.-% wenigstens eines organischen, polymeren, filmbildenden Bindemittelmaterials in Form einer gesättigten, organischen, polymeren Zusammensetzung mit einer Einfriertemperatur im Bereich von etwa 0 °C bis etwa 150 °C oder eines Polymeren-in-Monomeren-Sirups enthält, wobei der Polymere-in-Monomere-Sirup im wesentlichen besteht aus :

(i) von etwa 2 bis etwa 60 Gew.-% wenigstens eines Additionspolymeren,

(ii) von etwa 10 bis etwa 98 Gew.-% wenigstens einer polymerisierbaren, olefinisch ungesättigten Verbindung mit wenigstens einer Gruppe $>C=C<$, und

(iii) von 0 bis etwa 30 Gew.-% eines Polymeren, welches die Gruppierung $(CH_2CCl=CH-CH_2)_n$ enthält, worin n eine ganze Zahl ist,

wobei (i) und (ii) als ein partielles Polymerisationsprodukt von (ii) oder von (ii) in Anwesenheit von (iii) vorhanden ist, und wobei die Mischung von (i) und (ii) oder von (i), (ii) und (iii) ein Sirup von in Monomerem gelösten oder dispergierten, polymeren Materialien ist, wobei im Sirup die Menge des von (ii) abstammenden (i) im Bereich von etwa 2 bis etwa 90 Gew.-%, bezogen auf das Gesamtgewicht von (i), (ii) und (iii), liegt, und wobei der Träger in der Lage ist, das Oxidationsmittel und das filmbildende Bindemittelmaterial als stabile Lösung oder Dispersion zu halten.

5. Klebstoffsystem nach Anspruch 4, dadurch gekennzeichnet, daß das tertiäre Amin der Formel (V) in einer Menge im Bereich von etwa 0,01 bis etwa 10 Gew.-% vorhanden ist.

6. Klebstoffsystem nach Anspruch 1, dadurch gekennzeichnet, daß die phosphorhaltige Verbindung folgende Formel besitzt :

$$(CH_2=\underset{\displaystyle R^3}{\underset{|}{C}}-\overset{\displaystyle O}{\overset{\|}{C}}-O-A)_m-\overset{\displaystyle O}{\overset{\|}{\underset{\displaystyle OH}{\underset{|}{P}}}}-(OR)_{2-m}, \qquad (IV)$$

worin der Rest $R^3$ Wasserstoff, Halogen, ein Alkylrest mit 1 bis 8 Kohlenstoffatomen oder der Rest $CH_2=CH-$ ist, der Rest $R^4$ Wasserstoff, ein Alkylrest mit 1 bis 8 Kohlenstoffatomen oder ein Halogenalkylrest mit 1 bis 8 Kohlenstoffatomen ist, der Rest A $-R^5O-$ oder $(R^6O)_n$ ist, worin $R^5$ eine aliphatische oder cycloaliphatische Alkylengruppe mit 1 bis 9 Kohlenstoffatomen ist, der Rest $R^6$ eine Alkylengruppe mit 1 bis 7 Kohlenstoffatomen ist, n eine ganze Zahl von 2 bis 10 und m = 1 oder 2 bedeuten.

7. Klebstoffsystem nach Anspruch 6, dadurch gekennzeichnet, daß die phosphorhaltige Verbindung in einer Menge im Bereich von etwa 0,1 bis etwa 20 Gew.-% der polymerisierbaren Klebstoffmasse

vorhanden ist, das Reduktionsmittel in einer Menge im Bereich von etwa 0,05 bis etwa 10 Gew.-% der polymerisierbaren Klebstoffmasse vorhanden ist, das Oxidationsmittel in einer Menge im Bereich von etwa 0,5 bis etwa 30 Gew.-% des Abbindebeschleunigers vorhanden ist, und der Abbindebeschleuniger von etwa 10 bis etwa 99,5 Gew.-% des Abbindebeschleunigers an einem Träger enthält, der wenigstens ein inertes, organisches Verdünnungsmittel umfaßt, wobei der Träger in der Lage ist, das Oxidationsmittel als stabile Lösung oder Dispersion zu halten.

8. Klebstoffsystem nach Anspruch 7, dadurch gekennzeichnet, daß das tertiäre Amin der Formel (V) in einer Menge im Bereich von etwa 0,01 bis etwa 10 Gew.-% vorhanden ist.

9. Klebstoffsystem nach Anspruch 6, dadurch gekennzeichnet, daß der Abbindebeschleuniger von etwa 0,05 bis etwa 50 Gew.-% wenigstens eines organischen, polymeren, filmbildenden Bindemittelmaterials in Form einer gesättigten, organischen, polymeren Zusammensetzung mit einer Einfriertemperatur im Bereich von etwa 0 °C bis etwa 150 °C oder eines Polymer-in-Monomer-Sirups enthält, wobei der Polymer-in-Monomer-Sirup im wesentlichen besteht aus :

(i) von etwa 2 bis etwa 60 Gew.-% wenigstens eines Additionspolymeren,

(ii) von etwa 10 bis etwa 98 Gew.-% wenigstens einer polymerisierbaren, olefinisch ungesättigten Verbindung mit wenigstens einer Gruppe $>C=C<$, und

(iii) von 0 bis etwa 30 Gew.-% eines Polymeren, welches die Gruppierung $(CH_2CCl=CH—CH_2)_n$ enthält, worin n eine ganze Zahl ist,

wobei (i) und (ii) als ein partielles Polymerisationsprodukt von (ii) oder von (ii) in Anwesenheit von (iii) vorhanden ist, und wobei die Mischung von (i) und (ii) oder von (i), (ii) und (iii) ein Sirup von in Monomerem gelösten oder dispergierten, polymeren Materialien ist, wobei im Sirup die Menge des von (ii) abstammenden (i) im Bereich von etwa 2 bis etwa 90 Gew-%, bezogen auf das Gesamtgewicht von (i), (ii) und (iii), liegt, und wobei der Träger in der Lage ist, das Oxidationsmittel und das filmbildende Bindemittelmaterial als stabile Lösung oder Dispersion zu halten.

10. Klebstoffsystem nach Anspruch 9, dadurch gekennzeichnet, daß das tertiäre Amin der Formel (V) in einer Menge im Bereich von etwa 0,01 bis etwa 10 Gew.-% vorhanden ist.

11. Bei Zimmertemperatur aushärtbares Klebstoffsystem, dadurch gekennzeichnet, daß es umfaßt :

A. als polymerisierbare Klebstoffmasse ein Gemisch von :

a) von etwa 10 bis etwa 90 Gew.-% wenigstens eines polymerisierbaren Materials in Form von Styrol, Methylmethacrylat, Ethylmethacrylat, n-Butylmethacrylat, Isobutylmethacrylat, t-Butylmethacrylat, Hexylmethacrylat, Ethylhexylmethacrylat, partiell polymerisiertem Sirup von einem oder mehreren solcher Monomeren, wobei ein solcher Sirup sowohl Polymeres als auch nichtpolymerisiertes Monomeres enthält, oder von Mischungen hiervon,

b) von etwa 10 bis etwa 90 Gew.-% wenigstens eines Reaktionsproduktes wenigstens eines isocyanatfunktionellen Vorpolymeren und wenigstens eines hydroxyfunktionellen Monomeren mit wenigstens einer Einheit an polymerisierbarer olefinischer Unsättigung, wobei ein solches Reaktionsprodukt durch die Anwesenheit von wenigstens zwei Einheiten an olefinischer Unsättigung und die praktische Abwesenheit von freien Isocyanatgruppen gekennzeichnet ist,

c) von 0 bis etwa 20 Gew.-% wenigstens eines polymerisierbaren, olefinisch ungesättigten Monomeren, wobei die Menge dieses Monomeren zusätzlich zu der Menge irgendeines solchen Monomeren, wie es in A. a) verwendet wird, vorliegt,

d) von 0 bis etwa 40 Gew.-% wenigstens eines elastomeren, polymeren Materials mit einer Einfriertemperatur im Bereich unterhalb etwa 5 °C,

wobei die jeweiligen Prozentsätze von a) bis d) sich auf das Gesamtgewicht von a) bis d) beziehen,

e) eine wirksame Menge wenigstens eines Reduktionsmittels,

f) von 0 bis etwa 15 Gew.-% der polymerisierbaren Klebstoffzusammensetzung an einem Gemisch eines Metallmolybdates in Form von Zinkmolybdat, Kalziummolybdat, Bariummolybdat, Strontiummolybdat oder Mischungen hiervon und eines Metallphosphates in Form von Zinkphosphat, Kalziumphosphat, Magnesiumphosphat oder Mischungen hiervon, wobei das Metallmolybdat, bezogen auf Volumenkonzentration, in einer Menge von etwa 2 bis etwa 3 Teilen auf 1 Teil des Metallphosphates vorhanden ist, und

g) von 0 bis etwa 15 Gew.-% der polymerisierbaren Klebstoffzusammensetzung an wenigstens einer Verbindung in Form von polybasischen Bleisalzen der Phosphorsäure, polybasischen Bleisalzen von gesättigten organischen Dicarbonsäuren oder -säureanhydriden, polybasischen Bleisalzen von ungesättigten organischen Dicarbonsäuren oder -säureanhydriden, Zinkoxid oder Mischungen hiervon, wobei die Menge von a) bis d) in Gew.-% 100 minus der kombinierten Menge der Gesamtgewichtsprozentsätze von

e) bis g) beträgt und

B. als Abbindebeschleuniger eine Mischung, umfassend

a) von etwa 0,5 bis etwa 30 Gew.-% wenigstens eines Oxidationsmittels, wobei das Oxidationsmittel bei Zimmertemperatur mit dem Reduktionsmittel zur Erzeugung von freien Radikalen reaktionsfähig ist, welche zur Initiierung einer Additionspolymerisation der polymerisierbaren Klebstoffzusammensetzung wirksam sind,

b) von etwa 0,1 bis etwa 20 Gew.-% wenigstens einer phosphorhaltigen Verbindung der Formeln

$$X - R - \overset{\overset{\displaystyle O}{\|}}{\underset{\underset{\displaystyle OH}{|}}{P}} - R - X \qquad (I)$$

worin jeder Rest R gleich oder verschieden sein kann und unabhängig voneinander ein zweiwertiger, direkt an das Phosphoratom über eine Kohlenstoff-Phosphor-Bindung gebundener organischer Rest ist, wobei dieser zweiwertige Rest ein zweiwertiger, nichtsubstituierter organischer Rest oder ein zweiwertiger organischer Rest mit wenigstens einer Substituentengruppe in Form von Halogen, Hydroxyl, Amino, Alkylresten mit 1 bis 8 Kohlenstoffatomen oder Arylresten mit wenigstens einer wenigstens einen aromatischen Ring enthaltenden Einheit ist, und worin jeder Rest X gleich oder verschieden sein kann und jeder Rest X unabhängig voneinander eine funktionelle Gruppe in Form von Wasserstoff, Hydroxyl, Amino. Mercapto, Halogen oder $CH_2{=}C{<}$ bzw. $CH_2{=}CH{-}$ ist ; oder

$$X - R - \overset{\overset{\displaystyle O}{\|}}{\underset{\underset{\displaystyle OH}{|}}{P}} - O - R^1 \qquad (II)$$

worin die Reste R und X die zuvor angegebene Bedeutung besitzen und $R^1$ Wasserstoff oder $-R^2-X$ ist, worin $R^2$ ein zweiwertiger, direkt an den Sauerstoffrest über eine Kohlenstoff-Sauerstoff-Bindung gebundener organischer Rest ist und dieser zweiwertige Rest $R^2$ ein zweiwertiger nichtsubstituierter organischer Rest oder ein zweiwertiger organischer Rest ist, der wenigstens einen Substituenten in Form von Halogen, Hydroxyl, Amino, Alkylresten mit 1 bis 8 Kohlenstoffatomen oder Arylresten mit wenigstens einer wenigstens einen aromatischen Ring enthaltenden Einheit aufweist, und der Rest X die zuvor angegebene Bedeutung besitzt, oder

$$R^1 - O - \overset{\overset{\displaystyle O}{\|}}{\underset{\underset{\displaystyle OH}{|}}{P}} - O - R^1 \qquad (III)$$

worin der Rest $R^1$ die zuvor angegebene Bedeutung besitzt,

c) von 0 bis etwa 5 Gew.-% wenigstens eines Fängers für freie Radikale, und

d) von etwa 40 bis etwa 99 Gew.-% eines Trägers, der wenigstens ein inertes, organisches Verdünnungsmittel umfaßt, wobei der Träger in der Lage ist, das Oxidationsmittel und die phosphorhaltige Verbindung als stabile Lösung oder Dispersion zu halten.

12. Klebstoffsystem nach Anspruch 11, dadurch gekennzeichnet, daß das Reduktionsmittel in einer Menge im Bereich von etwa 0,05 bis etwa 10 Gew.-% der polymerisierbaren Klebstoffzusammensetzung vorhanden ist.

13. Klebstoffsystem nach Anspruch 11, dadurch gekennzeichnet, daß die phosphorhaltige Verbindung folgende Formel besitzt :

$$(CH_2 = \underset{\underset{\displaystyle R^3}{|}}{C} - \overset{\overset{\displaystyle O}{\|}}{C} - O - A)_m - \overset{\overset{\displaystyle O}{\|}}{\underset{\underset{\displaystyle OH}{|}}{P}} - (OR)_{2-m}\ , \qquad (IV)$$

worin der Rest $R^3$ Wasserstoff, Halogen, ein Alkylrest mit 1 bis 8 Kohlenstoffatomen oder der Rest $CH_2{=}CH{-}$ ist, der Rest $R^4$ Wasserstoff, ein Alkylrest mit 1 bis 8 Kohlenstoffatomen oder ein Halogenalkylrest mit 1 bis 8 Kohlenstoffatomen ist, der Rest A $-R^5O-$ oder $(R^6O)_n$ ist, worin $R^5$ eine aliphatische oder cycloaliphatische Alkylengruppe mit 1 bis 9 Kohlenstoffatomen ist, der Rest $R^6$ eine Alkylengruppe mit 1 bis 7 Kohlenstoffatomen ist, n eine ganze Zahl von 2 bis 10 und m = 1 oder 2 bedeuten.

14. Klebstoffsystem nach Anspruch 13, dadurch gekennzeichnet, daß das Reduktionsmittel in einer Menge im Bereich von etwa 0,05 bis etwa 10 Gew.-% der polymerisierbaren Klebstoffzusammensetzung vorhanden ist.

15. Klebstoffsystem nach Anspruch 13, dadurch gekennzeichnet, daß der Abbindebeschleuniger von etwa 0,05 bis etwa 50 Gew.-% wenigstens eines organischen, polyeren, filmbildenden Bindemittelmaterials in Form einer gesättigten, organischen, polymeren Zusammensetzung mit einer Einfriertemperatur

im Bereich von etwa 0 °C bis etwa 150 °C oder eines Polymer-in-Monomer-Sirups enthält, wobei der Polymer-in-Monomer-Sirup im wesentlichen besteht aus :

(i) von etwa 2 bis etwa 60 Gew.-% wenigstens eines Additionspolymeren,

(ii) von etwa 10 bis etwa 98 Gew.-% wenigstens einer polymerisierbaren, olefinisch ungesättigten Verbindung mit wenigstens einer Gruppe $>C=C<$, und

(iii) von 0 bis etwa 30 Gew.-% eines Polymeren, welches die Gruppierung $(CH_2CCl{=}CH{-}CH_2)_n$ enthält, worin n eine ganze Zahl ist,

wobei (i) und (ii) als ein partielles Polymerisationsprodukt von (ii) oder von (ii) in Anwesenheit von (iii) vorhanden ist, und wobei die Mischung von (i) und (ii) oder von (i), (ii) und (iii) ein Sirup von in Monomerem gelösten oder dispergierten, polymeren Materialien ist, wobei im Sirup die Menge des von (ii) abstammenden (i) im Bereich von etwa 2 bis etwa 90 Gew.-%, bezogen auf das Gesamtgewicht von (i), (ii) und (iii), liegt, und wobei der Träger in der Lage ist, das Oxidationsmittel, die phosphorhaltige Verbindung und das filmbildende Bindemittelmaterial als stabile Lösung oder Dispersion zu halten.

16. Klebstoffsystem nach Anspruch 15, dadurch gekennzeichnet, daß das Reduktionsmittel in einer Menge im Bereich von etwa 0,05 bis etwa 10 Gew.-% der polymerisierbaren Klebstoffzusammensetzung vorhanden ist.

17. Bei Zimmertemperatur aushärtbares Klebstoffsystem, dadurch gekennzeichnet, daß es umfaßt :

AA) als polymerisierbare Klebstoffzusammensetzung ein Gemisch von

a) von etwa 1 bis etwa 30 Gew.-% wenigstens eines elastomeren, polymeren Materials in Form von einem Polybutadienhomopolymeren, Copolymeren von Butadien und wenigstens einem hiermit copolymerisierbaren Monomeren, ausgewählt aus Styrol, Acrylnitril, Methacrylnitril oder Mischungen hiervon, einem modifizierten polymeren Material in Form eines Polybutadienhomopolymeren oder Copolymeren von Butadien, wie zuvor definiert, wobei das Homopolymere oder Copolymere durch Copolymerisation von Spurenmengen von bis zu 5 Gew.-%, bezogen auf das elastomere Material, wenigstens eines funktionellen Monomeren hierin modifiziert worden sind,

b) von etwa 25 bis etwa 85 Gew.-% wenigstens eines polymerisierbaren Acrylmonomeren oder substituierten Acrylmonomeren,

c) von 0 bis etwa 50 Gew.-% wenigstens eines polymerisierbaren, olefinisch ungesättigten, nichtacrylartigen Monomeren,

d) von 0 bis etwa 60 Gew.-% wenigstens eines polymeren Materials mit einer grundmolaren Viskositätszahl im Bereich von etwa 0,1 bis etwa 1,3, das von wenigstens einem der Monomeren (b) und (c) abstammt,

wobei die Mengen von a) bis d) sich auf das Gesamtgewicht von a) bis d) beziehen,

e) eine wirksame Menge wenigstens einer phosphorhaltigen Verbindung der Formeln :

$$X-R-\overset{\overset{\displaystyle O}{\|}}{\underset{\underset{\displaystyle OH}{|}}{P}}-R-X \qquad (I)$$

worin jeder Rest R gleich oder verschieden sein kann und unabhängig voneinander ein zweiwertiger, direkt an das Phosphoratom über eine Kohlenstoff-Phosphor-Bindung gebundener organischer Rest ist, wobei dieser zweiwertige Rest ein zweiwertiger, nichtsubstituierter organischer Rest oder ein zweiwertiger organischer Rest mit wenigstens einer Substituentengruppe in Form von Halogen, Hydroxyl, Amino, Alkylresten mit 1 bis 8 Kohlenstoffatomen oder Arylresten mit wenigstens einer wenigstens einen aromatischen Ring enthaltenden Einheit ist, und worin jeder Rest X gleich oder verschieden sein kann und jeder Rest X unabhängig voneinander eine funktionelle Gruppe in Form von Wasserstoff, Hydroxyl, Amino, Mercapto, Halogen oder $CH_2{=}C<$ ist ; oder

$$X-R-\overset{\overset{\displaystyle O}{\|}}{\underset{\underset{\displaystyle OH}{|}}{P}}-O-R^1 \qquad (II)$$

worin die Reste R und X die zuvor angegebene Bedeutung besitzen und $R^1$ Wasserstoff oder $-R^2-X$ ist, worin $R^2$ ein zweiwertiger, direkt an den Sauerstoffrest über eine Kohlenstoff-Sauerstoff-Bindung gebundener organischer Rest ist und dieser zweiwertige Rest $R^2$ ein zweiwertiger nichtsubstituierter organischer Rest oder ein zweiwertiger organischer Rest ist, der wenigstens einen Substituenten in Form von Halogen, Hydroxyl, Amino, Alkylresten mit 1 bis 8 Kohlenstoffatomen oder Arylresten mit wenigstens einer wenigstens einen aromatischen Ring enthaltenden Einheit aufweist, und der Rest X die zuvor angegebene Bedeutung besitzt, oder

$$R^1-O-\overset{\overset{\displaystyle O}{\|}}{\underset{\underset{\displaystyle OH}{|}}{P}}-O-R^1 \qquad (III)$$

worin der Rest $R^1$ die zuvor angegebene Bedeutung besitzt,

f) eine wirksame Menge wenigstens eines Reduktionsmittels,

g) von 0 bis etwa 10 Gew.-% der polymerisierbaren Klebstoffzusammensetzung wenigstens eines tertiären Amins der folgenden Formel

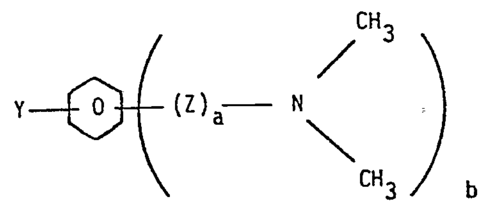

(V)

worin Z eine Methylengruppe ist, Y Wasserstoff, Hydroxy, Amino, Halogen, einen Alkylrest mit 1 bis 8 Kohlenstoffatomen oder einen Alkoxyrest, worin die Alkyleinheit 1 bis 8 Kohlenstoffe besitzt, bedeutet, $a = 0$ oder 1 ist und $b = 1$ oder 2 ist,

h) von 0 bis etwa 15 Gew.-% der polymerisierbaren Klebstoffzusammensetzung einer Mischung eines Metallmolybdates in Form von Zinkmolybdat, Kalziummolybdat, Bariummolybdat, Strontiummolybdat oder Mischungen hiervon und eines Metallphosphates in Form von Zinkphosphat, Kalziumphosphat, Magnesiumphosphat oder Mischungen hiervon, wobei dieses Metallmolybdat in einer Menge, bezogen auf Volumenkonzentration, von etwa 2 bis etwa 3 Teilen pro Teil des Metallphosphates vorhanden ist, und

i) von 0 bis etwa 15 Gew.-% der polymerisierbaren Klebstoffzusammensetzung wenigstens einer Verbindung in Form von polybasischen Bleisalzen von Phosphorsäure, polybasischen Bleisalzen von gesättigten organischen Dicarbonsäuren und -säureanhydriden,

Zinkoxid oder Mischungen hiervon, wobei die Prozentsätze von a) bis e) 100 weniger der kombinierten Prozentsätze von f) bis i) ausmachen, und

AB) als Abbindebeschleuniger eine wirksame Menge wenigstens eines Oxidationsmittels, wobei das Oxidationsmittel bei Zimmertemperatur mit dem Reduktionsmittel unter Bildung von freien Radikalen reaktiv ist, welche zur Initiierung der Additionspolymerisation der polymerisierbaren Klebstoffzusammensetzung wirksam sind.

18. Klebstoffsystem nach Anspruch 17, dadurch gekennzeichnet, daß der Abbindebeschleuniger von etwa 0,05 bis etwa 50 Gew.-% wenigstens eines organischen, polymeren, filmbildenden Bindemittelmaterials in Form einer gesättigten, organischen, polymeren Zusammensetzung mit einer Einfriertemperatur im Bereich von etwa 0 °C bis etwa 150 °C oder eines Polymer-in-Monomer-Sirups enthält, wobei der Polymer-in-Monomer-Sirup im wesentlichen besteht aus :

(i) von etwa 2 bis etwa 60 Gew.-% wenigstens eines Additionspolymeren,

(ii) von etwa 10 bis etwa 98 Gew.-% wenigstens einer polymerisierbaren, olefinisch ungesättigten Verbindung mit wenigstens einer Gruppe $>C=C<$, und

(iii) von 0 bis etwa 30 Gew.-% eines Polymeren, welches die Gruppierung $(CH_2CCl{=}CH{-}CH_2)_n$ enthält, worin n eine ganze Zahl ist,

wobei (i) und (ii) als ein partielles Polymerisationsprodukt von (ii) oder von (ii) in Anwesenheit von (iii) vorhanden ist, und wobei die Mischung von (i) und (ii) oder von (i), (ii) und (iii) ein Sirup von in Monomerem gelösten oder dispergierten, polymeren Materialien ist, wobei im Sirup die Menge des von (ii) abstammenden (i) im Bereich von etwa 2 bis etwa 90 Gew.-%, bezogen auf das Gesamtgewicht von (i), (ii) und (iii), liegt, sowie von etwa 40 bis etwa 99 Gew.-% eines wenigstens ein inertes, organisches Verdünnungsmittel enthaltenden Trägers, wobei der Träger in der Lage ist, das Oxidationsmittel und das filmbildende Bindemittelmaterial als stabile Lösung oder Dispersion zu halten.

19. Bei Zimmertemperatur aushärtbares Klebstoffsystem, dadurch gekennzeichnet, daß es umfaßt :

AA) als polymerisierbare Klebstoffzusammensetzung ein Gemisch von

a) von etwa 1 bis etwa 30 Gew.-% wenigstens eines elastomeren, polymeren Materials in Form von einem Polybutadienhomopolymeren, Copolymeren von Butadien und wenigstens einem hiermit copolymerisierbaren Monomeren, ausgewählt aus Styrol, Acrylnitril, Methacrylnitril oder Mischungen hiervon, einem modifizierten polymeren Material in Form eines Polybutadienhomopolymeren oder Copolymeren von Butadien, wie zuvor definiert, wobei das Homopolymere oder Copolymere durch Copolymerisation von Spurenmengen von bis zu 5 Gew.-%, bezogen auf das elastomere Material, wenigstens eines funktionellen Monomeren hierin modifiziert worden sind,

b) von etwa 25 bis etwa 85 Gew.-% wenigstens eines polymerisierbaren Acrylmonomeren oder substituierten Acrylmonomeren,

c) von 0 bis etwa 50 Gew.-% wenigstens eines polymerisierbaren, olefinisch ungesättigten, nichtacryl-artigen Monomeren,

d) von 0 bis etwa 60 Gew.-% wenigstens eines polymeren Materials mit einer grundmolaren Viskositätszahl im Bereich von etwa 0,1 bis etwa 1,3, das von wenistens einem der Monomeren (b) und (c) abstammt,

wobei die Mengen von a) bis d) sich auf das Gesamtgewicht von a) bis d) beziehen,

e) eine wirksame Menge wenigstens eines Reduktionsmittels,

f) von 0 bis etwa 15 Gew.-% der polymerisierbaren Klebstoffzusammensetzung an einem Gemisch eines Metallmolybdates in Form von Zinkmolybdat, Kalziummolybdat, Bariummolybdat, Strontiummolybdat oder Mischungen hiervon und eines Metallphosphates in Form von Zinkphosphat, Kalziumphosphat, Magnesiumphosphat oder Mischungen hiervon, wobei das Metallmolybdat in einer Menge, bezogen auf Volumenkonzentration, von etwa 2 bis etwa 3 Teilen auf 1 Teil des Metallphosphates vorhanden ist, und

g) von 0 bis etwa 15 Gew.-% der polymerisierbaren Klebstoffzusammensetzung an wenigstens einer Verbindung in Form von polybasischen Bleisalzen von Phosphorsäure, polybasischen Bleisalzen von gesättigten organischen Dicarbonsäuren oder -säureanhydriden, polybasischen Bleisalzen von ungesättigten organischen Dicarbonsäuren oder -säureanhydriden, Zinkoxid oder Mischungen hiervon, wobei die Mengen von a) bis d) in Gewichtsprozent 100 minus der kombinierten Menge, in Gesamtgewichtsprozent, von e) bis g) beträgt, und

AB) als Abbindebeschleuniger eine Mischung umfassend :

a) von etwa 0,5 bis etwa 30 Gew.-% wenigstens eines Oxidationsmittels, wobei das Oxidationsmittel bei Zimmertemperatur mit dem Reduktionsmittel zur Bildung von freien Radikalen reaktionsfähig ist, welche zur Initiierung der Additionspolymerisation der polymerisierbaren Klebstoffzusammensetzung wirksam sind,

b) eine effektive Menge wenigstens einer phosphorhaltigen Verbindung der folgenden Formeln :

$$X - R - \overset{\overset{\displaystyle O}{\|}}{\underset{\underset{\displaystyle OH}{|}}{P}} - R - X \qquad (I)$$

worin jeder Rest R gleich oder verschieden sein kann und unabhängig voneinander ein zweiwertiger, direkt an das Phosphoratom über eine Kohlenstoff-Phosphor-Bindung gebundener organischer Rest ist, wobei dieser zweiwertige Rest ein zweiwertiger, nichtsubstituierter organischer Rest oder ein zweiwertiger organischer Rest mit wenigstens einer Substituentengruppe in Form von Halogen, Hydroxyl, Amino, Alkylresten mit 1 bis 8 Kohlenstoffatomen oder Arylresten mit wenigstens einer wenigstens einen aromatischen Ring enthaltenden Einheit ist, und worin jeder Rest X gleich oder verschieden sein kann und jeder Rest X unabhängig voneinander eine funktionelle Gruppe in Form von Wasserstoff, Hydroxyl, Amino, Mercapto, Halogen oder $CH_2{=}C\lt$ ist ; oder

$$X - R - \overset{\overset{\displaystyle O}{\|}}{\underset{\underset{\displaystyle OH}{|}}{P}} - O - R^1 \qquad (II)$$

worin die Reste R und X die zuvor angegebene Bedeutung besitzen und $R^1$ Wasserstoff oder $-R^2-X$ ist, worin $R^2$ ein zweiwertiger, direkt an den Sauerstoffrest über eine Kohlenstoff-Sauerstoff-Bindung gebundener organischer Rest ist und dieser zweiwertige Rest $R^2$ ein zweiwertiger nichtsubstituierter organischer Rest oder ein zweiwertiger organischer Rest ist, der wenigstens einen Substituenten in Form von Halogen, Hydroxyl, Amino, Alkylresten mit 1 bis 8 Kohlenstoffatomen oder Arylresten mit wenigstens einer wenigstens einen aromatischen Ring enthaltenden Einheit aufweist, und der Rest X die zuvor angegebene Bedeutung besitzt, oder

$$R^1 - O - \overset{\overset{\displaystyle O}{\|}}{\underset{\underset{\displaystyle OH}{|}}{P}} - O - R^1 \qquad (III)$$

worin der Rest $R^1$ die zuvor angegebene Bedeutung besitzt,

c) von 0 bis etwa 5 Gew.-% wenigstens eines Fängers für freie Radikale, und

d) von etwa 40 bis etwa 99 Gew.-% eines wenigstens ein inertes, organisches Verdünnungsmittel umfassenden Trägers, wobei der Träger in der Lage ist, das Oxidationsmittel und die phosphorhaltige Verbindung als stabile Lösung oder Dispersion zu halten.

20. Klebstoffsystem nach Anspruch 19, dadurch gekennzeichnet, daß der Abbindebeschleuniger von etwa 0,05 bis etwa 50 Gew.-% wenigstens eines organischen, polymeren, filmbildenden Bindemittelmaterials in Form einer gesättigten, organischen, polymeren Zusammensetzung mit einer Einfriertemperatur im Bereich von etwa 0 °C bis etwa 150 °C oder eines Polymer-in-Monomer-Sirups enthält, wobei der Polymer-in-Monomer-Sirup im wesentlichen besteht aus :

(i) von etwa 2 bis etwa 60 Gew.-% wenigstens eines Additionspolymeren,

(ii) von etwa 10 bis etwa 98 Gew.-% wenigstens einer polymerisierbaren, olefinisch ungesättigten Verbindung mit wenigstens einer Gruppe $>C=C<$, und

(iii) von 0 bis etwa 30 Gew.-% eines Polymeren, welches die Gruppierung $(CH_2CCl=CH—CH_2)_n$ enthält, worin n eine ganze Zahl ist,

wobei (i) und (ii) als ein partielles Polymerisationsprodukt von (ii) oder von (ii) in Anwesenheit von (iii) vorhanden ist, und wobei die Mischung von (i) und (ii) oder von (i), (ii) und (iii) ein Sirup von in Monomerem gelösten oder dispergierten, polymeren Materialien ist, wobei im Sirup die Menge des von (ii) abstammenden (i) im Bereich von etwa 2 bis etwa 90 Gew.-%, bezogen auf das Gesamtgewicht von (i), (ii) und (iii), liegt, sowie von etwa 40 bis etwa 99 Gew.-% eines wenigstens ein inertes, organisches Verdünnungsmittel enthaltenden Trägers, wobei der Träger in der Lage ist, das Oxidationsmittel und das filmbildende Bindemittelmaterial als stabile Lösung oder Dispersion zu halten.

## Claims

1. A room temperature curable adhesive system characterized in that the system comprises :

A. as a polymerizable adhesive composition, a mixture of

(a) from about 10 to about 90 percent by weight of at least one polymerizable material selected from the group consisting of styrene, methyl methacrylate, ethyl methacrylate, n-butyl methacrylate, isobutyl methacrylate, t-butyl methacrylate, hexyl methacrylate, ethylhexyl methacrylate, partially polymerized syrup of one or more of such monomers, such syrup containing both polymer and unpolymerized monomer, and mixtures thereof ;

(b) from about 10 to about 90 percent by weight of at least one reaction product of at least one isocyanate-functional prepolymer and at least one hydroxy-functional monomer having at least one unit of polymerizable olefinic unsaturation, such reaction product being distinguished by the presence of at least two units of olefinic unsaturation and the substantial absence of free isocyanate group ;

(c) from zero to about 20 percent by weight of at least one polymerizable olefinically unsaturated monomer, the amount of said monomer being in addition to the amount of any such monomer employed in (A) (a) ;

(d) from zero to about 40 percent by weight of at least one elastomeric polymeric material having a second order glass transition temperature below about 5 °C ;

the respective percentages of (a)-(d) being based on the total weight of (a)-(d) ;

(e) an effective amount of at least one phosphorous-containing compound having the formulae

$$X - R - \overset{\overset{\displaystyle O}{\|}}{\underset{\underset{\displaystyle OH}{|}}{P}} - R - X \qquad (I)$$

wherein each radical R is the same or different, and each R is independently a divalent organic radical directly bonded to the phosphorous atom through a carbon-phosphorous bond, said divalent radical being selected from the group consisting of divalent unsubstituted organic radical and divalent organic radical having at least one substituent group in form of halogen, hydroxyl, amino, alkyl radicals containing from 1 to 8 carbon atoms or aryl radicals having at least one moiety containing at least one aromatic nucleus ; and wherein each radical X is the same or different, and each radical X is independently a functional group in form of hydrogen, hydroxyl, amino, mercapto, halogen or $CH=C<$ ;

$$X - R - \overset{\overset{\displaystyle O}{\|}}{\underset{\underset{\displaystyle OH}{|}}{P}} - O - R^1 \qquad (II)$$

wherein the radicals R and X are as previously defined ; and $R^1$ is hydrogen or $—R^2—X$, wherein $R^2$ is a divalent organic radical directly bonded to the oxygen radical through a carbon-oxygen bond, said divalent radical $R^2$ being a divalent unsubstituted organic radical or a divalent organic radical having at least one substituent in form of halogen, hydroxyl, amino, alkyl radicals containing from 1 to 8 carbon atoms or aryl radicals having at least one moiety containing at least one aromatic nucleus and X is as previously defined ; and

$$R^1 - O - \overset{\overset{\displaystyle O}{\|}}{\underset{\underset{\displaystyle OH}{|}}{P}} - O - R^1 \qquad (III)$$

wherein $R^1$ is as previously described ;

(f) an effective amount of at least one reducing agent ;

(g) from zero to about 10 percent by weight of polymerizable adhesive composition of at least one tertiary amine having the formula

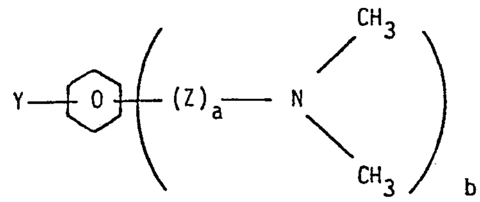

(V)

wherein Z is a methylene group ; Y is hydrogen, hydroxy, amino, halogen, alkyl radical having from 1 to 8 carbon atoms, or an alkoxy radical wherein the alkyl moiety has from 1 to 8 carbon atoms ; a is zero or 1 ; and b is 1 or 2 ;

(h) from zero to about 15-percent by weight of polymerizable adhesive composition of a mixture of a metal molybdate in form of zinc molybdate, calcium molybdate, barium molybdate, strontium molybdate and mixtures thereof and a metal phosphate in form of zinc phosphate, calcium phosphate, magnesium phosphate and mixtures thereof ; said metal molybdate being present on a volume concentration basis of from about 2 to about 3 parts per part of said metal phosphate ; and

(i) from zero to about 15 percent by weight of polymerizable adhesive composition of a least one compound in form of polybasic lead salts of phosphorous acid, polybasic lead salts or saturated organic dicarboxylic acids and acid anhydrides, polybasic lead salts of unsaturated organic dicarboxylic acids and acid anhydrides, zinc oxide, and mixtures thereof ;

the percentage of (a)-(d) being 100 minus the combined percentages of (e)-(i) ; and

B. as a bonding accelerator an effective amount of at least one oxidizing agent, said oxidizing agent being reactive at room temperature with said reducing agent to generate free radicals effective to initiate addition polymerization of said polymerizable adhesive composition.

2. An adhesive system according to claim 1 characterized in that said phosphorous-containing compound is present in an amount in the range from about 0.1 to about 20 percent by weight, of polymerizable adhesive composition ; said reducing agent is present in an amount in the range from about 0.05 to about 10 percent by weight of polymerizable adhesive composition ; said oxidizing agent is present in an amount in the range from about 0.5 to about 30 percent by weight of bonding accelerator ; and said bonding accelerator contains from about 40 to about 99.5 percent by weight of a carrier vehicle comprising at least one inert organic diluent, said carrier vehicle being capable of maintaining said oxidizing agent as a stable solution or dispersion.

3. An adhesive system according to claim 2 characterized in that tertiary amine having the formula (V) is present in an amount in the range from about 0.01 about 10 percent by weight.

4. An adhesive system according to claim 2 characterized in that said bonding accelerator contains from about 0.05 to about 50 percent by weight of at least one organic polymeric film-forming binder material in form of a saturated organic polymeric composition having a glass transition temperature in the range from about 0 °C to about 150 °C or a polymer-in-monomer syrup, said polymer-in-monomer syrup consisting essentially of

(i) from about 2 to about 60 percent by weight of at least one addition polymer ;

(ii) from about 10 to about 98 percent by weight of at least one polymerizable olefinically unsaturated compound having at least one $>C=<$ group ; and

(iii) from zero to about 30 percent by weight of a polymer containing the group $(CH_2CCl=CH-CH_2)_n$, wherein n is an integer ;

wherein (i) and (ii) are present as a partial polymerization product of (ii) or of (ii) in the presence of (iii), the mixture of (i) and (ii) or of (i), (ii) and (iii) being a syrup of polymeric materials dissolved or dispersed in monomer ; in which syrup the amount of (i) derived from (ii) is in the range from about 2 to about 90 percent by weight, based on the total weight of (i), (ii) and (iii) ; said carrier vehicle being capable of maintaining said oxidizing agent and said film-forming binder material as a stable solution or dispersion ;

5. An adhesive system according to claim 4 characterized in that said tertiary amine having the formula (V) is present in an amount in the range from about 0,01 to about 10 percent by weight.

6. An adhesive system according to claim 1 characterized in that said phosphorous-containing compound has the formula

$$(CH_2=\underset{R^3}{C}-\overset{O}{\overset{\|}{C}}-O-A)_m-\underset{OH}{\overset{O}{\overset{\|}{P}}}-(OR)_{2-m}\ , \qquad (IV)$$

wherein the radical $R^3$ is hydrogen, halogen, an alkyl radical having from 1 to 8 carbon atoms, or

$CH_2=CH—$ ; the radical $R^4$ is hydrogen, an alkyl radical having from 1 to 8 carbon atoms, or a haloalkyl radical having 1 to 8 carbon atoms ; the radical A is $—R^5O—$ or $(R^6O)_n$, wherein $R^5$ is an aliphatic or cycloaliphatic alkylene group containing from 1 to 9 carbon atoms ; the radical $R^6$ is an alkylene group having from 1 to 7 carbon atoms ; n is an integer from 2 to 10, and m is 1 or 2.

7. An adhesive system according to claim 6 characterized in that said phosphorous-containing compound is present in an amount in the range from about 0.1 to about 20 percent by weight of the polymerizable adhesive composition, said reducing agent is present in an amount in the range from about 0.05 to about 10 percent by weight of the polymerizable adhesive composition ; said oxidizing agent is present in an amount in the range from about 0.5 to about 30 percent by weight of the bonding accelerator ; and said bonding accelerator contains from about 10 to about 99.5 percent by weight of the bonding accelerator of a carrier vehicle comprising at least one inert organic diluent, said carrier vehicle being capable of maintaining said oxidizing agent as a stable solution or dispersion.

8. An adhesive system according to claim 7 characterized in that said tertiary amine having the formula (V) is present in an amount in the range from about 0.01 to about 10 percent by weight.

9. An adhesive system according to claim 6 characterized in that said bonding accelerator contains from about 0.05 to about 50 percent by weight of at least one organic polymeric film-forming binder material in form of saturated organic polymer composition having a glass transition temperature in the range from about 0 °C to about 150 °C or a polymer-in-monomer syrup, said polymer-in-monomer syrup consisting essentially of

(i) from about 2 to about 60 percent by weight of at least one addition polymer ;

(ii) from about 10 to about 98 percent by weight of at least one polymerizable olefinically unsaturated compound having at least one $>C=C<$ group ; and

(iii) from zero to about 30 percent by weight of a polymer containing the group $(CH_2CCl=CH—CH_2)_n$, wherein n is an integer ;

wherein (i) and (ii) are present as a partial polymerization product of (ii) or of (ii) in the presence of (iii), the mixture of (i) and (ii) or of (i), (ii) and (iii) being a syrup of polymeric materials dissolved or dispersed in monomer, in which syrup the amount of (i) derived from (ii) is in the range from about 2 to about 90 percent by weight, based on the total weight of (i), (ii) and (iii) ; said carrier vehicle being capable of maintaining said oxidizing agent and said film-forming binder material as a stable solution or dispersion.

10. An adhesive system according to claim 9 characterized in that said tertiary amine having the formula (V) is present in an amount in the range from about 0.01 to about 10 percent by weight.

11. A room temperature-curable adhesive system characterized in that the system comprises :

A. as a polymerizable adhesive composition, a mixture of

(a) from about 10 to about 90 percent by weight of at least one polymerizable material in form of styrene, methyl methacrylate, ethyl methacrylate, n-butyl methacrylate, isobutyl methacrylate, t-butylmethacrylate, hexyl methacrylate, ethyl-hexyl methacrylate, partially polymerized syrup of one or more of such monomers, such syrup containing both polymer and unpolymerized monomer, or mixtures thereof ;

(b) from about 10 to about 90 percent by weight of at least one reaction product of at least one isocyanate-functional prepolymer and at least one hydroxy-functional monomer having at least one unit of polymerizable olefinic unsaturation, such reaction product being characterized by the presence of at least two units of olefinic unsaturation and the substantial absence of free isocyanate group ;

(c) from zero to about 20 percent by weight of at least one polymerizable olefinically unsaturated monomer, the amount of said monomer being in addition to the amount of any such monomer employed in (A) (a) ;

(d) from zero to about 40 percent by weight of at least one elastomeric polymeric material having a glass transition temperature below about 5 °C ;

the respective percentages of (a)-(d) being based on the total weight of (a)-(d) ;

(e) an effective amount of at least one reducing agent ;

(f) from zero to about 15 percent by weight of the polymerizable adhesive composition of a mixture of a metal molybdate in form of zinc molybdate, calcium molybdate, barium molybdate, strontium molybdate or mixtures thereof and a metal phosphate selected in form of zinc phosphate, calcium phosphate, magnesium phosphate or mixtures thereof ; said metal molybdate being present on a volume concentration basis of from about 2 to about 3 parts per part of said metal phosphate ; and

(g) from zero to about 15 percent by weight of polymerizable adhesive composition of at least one compound in form of polybasic lead salts of phosphorous acid, polybasic lead salts of saturated organic dicarboxylic acids or acid anhydrides, polybasic lead salts of unsaturated organic dicarboxylic acids or acid anhydrides, zinc oxide, or mixtures thereof ; and

the amount of (a)-(d), in percent by weight, being 100 minus the combined amount in total percent by weight of (e)-(g) ; and

B. as a bonding accelerator, an admixture comprising

(a) from about 0.5 to about 30 percent by weight of at least one oxidizing agent ; said oxidizing agent being reactive at room temperature with said reducing agent to generate free radicals effective to initiate addition polymerization of said polymerizable adhesive composition ;

(b) from about 0.1 to about 20 percent by weight of at least one phosphorous-containing compound having the formulae

$$X - R - \underset{\displaystyle OH}{\overset{\displaystyle O}{\overset{\|}{P}}} - R - X \qquad (I)$$

wherein each radical R is the same or different, and each radical R is independently a divalent organic radical directly bonded to the phosphorous atom through a carbon-phosphorous bond, said divalent radical being a divalent unsubstituted organic radical or a divalent organic radical having at least one substituent group in form of halogen, hydroxyl, amino, alkyl radicals containing from 1 to 8 carbon atoms or aryl radicals having at least one moiety containing at least one aromatic nucleus ; and wherein each radical X is the same or different, and each radical X is independently a functional group in form of hydrogen, hydroxyl, amino, mercapto, halogen or $CH_2{=}C<$ and $CH_2{=}CH—$ respectively ; or

$$X - R - \underset{\displaystyle OH}{\overset{\displaystyle O}{\overset{\|}{P}}} - O - R^1 \qquad (II)$$

wherein the radicals R and X are as previously defined ; and $R^1$ is hydrogen or $—R^2—X$, wherein $R^2$ is a divalent organic radical directly bonded to the oxygen radical through a carbon-oxygen bond, said divalent radical $R^2$ being a divalent unsubstituted organic radical or a divalent organic radical having at least one substituant in form of halogen, hydroxyl, amino, alkyl radicals containing from 1 to 8 carbon atoms or aryl radicals having at least one moiety containing at least one aromatic nucleus and X is as previously defined ; or

$$R^1 - O - \underset{\displaystyle OH}{\overset{\displaystyle O}{\overset{\|}{P}}} - O - R^1 \qquad (III)$$

wherein $R^1$ is as previously described ;

(c) from zero to about 5 percent by weight of at least one free radical scavenger ; and

(d) from about 40 to about 99 percent by weight of a carrier vehicle comprising at least one inert organic diluent, said carrier vehicle being capable of maintaining said oxidizing agent and said phosphorous-containing compound as a stable solution or dispersion.

12. An adhesive system according to claim 11 characterized in that said reducing agent is present in an amount in the range from about 0.05 to about 10 percent by weight of the polymerizable adhesive composition.

13. An adhesive system according to claim 11 characterized in that said phosphorous-containing compound has the formula

$$(CH_2 = \underset{\displaystyle R^3}{C} - \overset{\displaystyle O}{\overset{\|}{C}} - O - A)_m - \underset{\displaystyle OH}{\overset{\displaystyle O}{\overset{\|}{P}}} -(OR)_{2-m} , \qquad (IV)$$

wherein the radical $R^3$ is hydrogen, halogen, an alkyl group having from 1 to 8 carbon atoms, or the radical $CH_2{=}CH—$ ; the radical $R^4$ is hydrogen, an alkyl group having from 1 to 8 carbon atoms, or a haloalkyl group having 1 to 8 carbon atoms ; the radical A is $—R^5O—$ or $(R^6O)_{n'}$ wherein $R^5$ is an aliphatic or cycloaliphatic alkylene group containing from 1 to 9 carbon atoms ; the radical $R^6$ is an alkylene group having from 1 to 7 carbon atoms ; n is an integer from 2 to 10, and m is 1 or 2.

14. An adhesive system according to claim 13, characterized in that said reducing agent is present in an amount in the range from about 0.05 to about 10 percent by weight of the polymerizable adhesive composition.

15. An adhesive system according to claim 13, characterized in that said bonding accelerator contains from about 0.05 to about 50 percent by weight of at least one organic polymeric film-forming binder material in form of a saturated organic polymeric composition having a glass transition temperature in the range from about 0 °C to about 150 °C or a polymer-in-monomer syrup, said polymer-in-monomer syrup consisting essentially of

(i) from about 2 to about 60 percent by weight of at least one addition polymer ;

(ii) from about 10 to about 98 percent by weight of at least one polymerizable olefinically unsaturated compound having at least one $\geq C{=}C<$ group ; and

(iii) from zero to about 30 percent by weight of a polymer containing the group $(CH_2CCl{=}CH{-}CH_2)_n$,
wherein n is an integer ;
wherein (i) and (ii) are present as a partial polymerization product of (ii) or of (ii) in the presence of (iii), the mixture of (i) and (ii) or of (i), (ii) and (iii) being a syrup of polymeric materials dissolved or dispersed in monomer, in which syrup the amount of (i) derived from (ii) is in the range from about 2 to about 90 percent by weight, based on the total weight of (i), (ii) and (iii) ; and the carrier vehicle being capable of maintaining said oxidizing agent, said phosphorus-containing compound and said film-forming binder material as a stable solution or dispersion.

16. An adhesive system according to claim 15 characterized in that said reducing agent is present in an amount in the range from about 0.05 to about 10 percent by weight of the polymerizable adhesive composition.

17. A room temperature-curable adhesive system characterized in that the system comprises

AA. as a polymerizable adhesive composition, a mixture of

(a) from about 1 to about 30 percent by weight of at least one elastomeric polymeric material in form of a polybutadiene homopolymer ; copolymer of butadiene and at least one monomer copolymerizable therewith selected from styrene, acrylonitrile, methacrylonitrile or mixtures thereof ; a modified polymeric material in form of a polybutadiene homopolymer and copolymer of butadiene as previously defined, which homopolymer and copolymer having been modified by copolymerization therein of trace amounts up to about 5 percent by weight, based on weight of elastomeric material of at least one functional monomer ;

(b) from about 25 to about 85 percent by weight of at least one polymerizable acrylic or substituted acrylic monomer ;

(c) from zero to about 50 percent by weight of at least one polymerizable olefinically unsaturated non-acrylic monomer ;

(d) from zero to about 60 percent by weight of at least one polymeric material having an intrinsic viscosity in the range from about 0.1 to about 1.3 derived from at least one of said (b) and (c) monomers ; the amounts of (a)-(d) being based on total weight of (a)-(d) ;

(e) an effective amount of at least one phosphorous-containing compound having the formulae

$$X - R - \overset{\overset{\displaystyle O}{\|}}{\underset{\underset{\displaystyle OH}{|}}{P}} - R - X \qquad \text{(I)}$$

wherein each R is the same or different, and each R is independently a divalent organic radical directly bonded to the phosphorous atom through a carbon phosphorous bond, said divalent radical being a divalent unsubstituted organic radical or divalent organic radical having at least one substituent group in form of halogen, hydroxyl, amino, alkyl radical containing from 1 to 8 carbon atoms or aryl radical having at least one moiety containing at least one aromatic nucleus ; and wherein each X is the same or different, and each X is independently a functional group in form of hydrogen, hydroxyl, amino, mercapto, halogen or $CH_2{=}C$ ; or

$$X - R - \overset{\overset{\displaystyle O}{\|}}{\underset{\underset{\displaystyle OH}{|}}{P}} - O - R^1 \qquad \text{(II)}$$

wherein the radicals R and X are as previously defined ; and $R^1$ is hydrogen or $-R^2-X$, wherein $R^2$ is a divalent organic radical directly bonded to the oxygen radical through a carbon-oxygen bond, said divalent radical $R^2$ being a divalent unsubstituted organic radical or a divalent organic radical having at least one substituent group in form of halogen, hydroxyl, amino, alkyl radicals containing from 1 to 8 carbon atoms or aryl radicals having at least one moiety containing at least one aromatic nucleus ; and the radical X is as previously defined ; and

$$R^1 - O - \overset{\overset{\displaystyle O}{\|}}{\underset{\underset{\displaystyle OH}{|}}{P}} - O - R^1 \qquad \text{(III)}$$

wherein $R^1$ is as previously described ;

(f) an effective amount of at least one reducing agent ;

(g) from zero to about 10 percent by weight of polymerizable adhesive composition of at least one tertiary amine having the formula

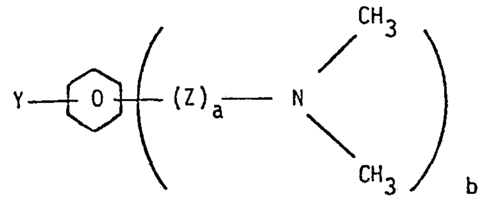

(V)

wherein Z is a methylene group ; Y is hydrogen, hydroxy, amino, halogen, alkyl radical having from 1 to 8 carbon atoms, or alkoxy radical wherein the alkyl moiety has from 1 to 8 carbon atoms ; a is zero or 1 ; and b is 1 or 2 ;

(h) from zero to about 15 percent by weight of polymerizable adhesive composition of a mixture of a metal molybdate in form of zinc molybdate, calcium molybdate, barium molybdate, strontium molybdate or mixtures thereof ; and a metal phosphate in form of zinc phosphate, calcium phosphate, magnesium phosphate or mixtures thereof ; said metal molybdate being present on a volume concentration basis of from about 2 to about 3 parts per part of said metal phosphate ; and

(i) from zero to about 15 percent by weight of polymerizable adhesive composition of at least one compound in form of polybasic lead salts of phosphorous acid ; polybasic lead salts of saturated organic dicarboxylic acids and acid anhydrides, zinc oxide, or mixtures thereof ;

the amount of (a)-(e), in percent by weight, being 100 minus the combined amounts of (f)-(i), in percent by weight ; and

AB. as a bonding accelerator, an effective amount of at least one oxidizing agent, said oxidizing agent being reactive at room temperature with said reducing agent to generate free radicals effective to initiate addition polymerization of said polymerizable adhesive composition.

18. An adhesive system according to claim 17 characterized in that said bonding accelerator contains from about 0.05 to about 50 percent by weight of at least one organic polymeric film-forming binder material in form of a saturated organic polymeric composition having a glass transition temperature in the range from about 0 °C to about 150 °C or a polymer-in-monomer syrup, said polymer-in-monomer syrup consisting essentially of

(i) from about 2 to about 60 percent by weight of at least one addition polymer ;

(ii) from about 10 to about 98 percent by weight of at least one polymerizable olefinically unsaturated compound having at least one $>C=C<$ group ; and

(iii) from zero to about 30 percent by weight of a polymer containing the group $(CH_2CCl=CH-CH_2)_n$, wherein n is an integer ;

wherein (i) and (ii) are present as a partial polymerizable product of (ii) or of (ii) in the presence of (iii), the mixture of (i) and (ii) or of (i), (ii) and (iii) being a syrup of polymeric materials dissolved or dispersed in monomer, in which syrup the amount of (i) derived from (ii) is in the range from about 2 to about 90 percent by weight, based on the total weight of (i), (ii) and (iii) ; and from about 40 to about 99 percent by weight of a carrier vehicle comprising at least one inert organic diluent, said carrier vehicle being capable of maintaining said oxidizing agent and said film-forming binder material as a stable solution or dispersion.

19. A room temperature-curable adhesive system, characterized in that the system comprises

AA. as a polymerizable adhesive composition, a mixture of

(a) from about 1 to about 30 percent by weight of at least one elastomeric polymeric material in form of a polybutadiene homopolymer ; copolymer or butadiene and at least one monomer copolymerizable therewith selected from styrene, acrylonitrile, methacrylonitrile or mixtures thereof ; of a modified polymeric material in form of a polybutadiene homopolymer or copolymer of butadiene as previously defined, which homopolymer or copolymer having been modified by copolymerization therein of trace amounts up to about 5 percent by weight, based on weight of elastomeric material, of at least one functional monomer ;

(b) from about 25 to about 85 percent by weight of at least one polymerizable acrylic or substituted acrylic monomer ;

(c) from zero to about 50 percent by weight of at least one polymerizable olefinically unsaturated non-acrylic monomer ;

(d) from zero to about 60 percent by weight of at least one polymeric material having an intrinsic viscosity in the range from about 0.1 to about 1.3 derived from at least one of said (b) and (c) monomers ; the amounts of (a)-(d) being based on total weight of (a)-(d) ;

(e) an effective amount of at least one reducing agent ;

(f) from zero to about 15 percent by weight of polymerizable adhesive composition of a mixture of a metal molybdate in form of zinc molybdate, calcium molybdate, barium molybdate, strontium molybdate or mixtures thereof and a metal phosphate in form of zinc phosphate, calcium phosphate, magnesium phosphate or mixtures thereof ; said metal molybdate being present on a volume concentration basis of from about 2 to about 3 parts per part of said metal phosphate ; and

(g) from zero to about 15 percent by weight of the polymerizable adhesive composition of at least one compound in form of polybasic lead salts of phosphorous acid, polybasic lead salts of saturated organic dicarboxylic acids or acid anhydrides, polybasic lead salts of unsaturated organic dicarboxylic acids or acid anhydrides, zinc oxide, or mixtures thereof ;
the amount of (a)-(d), in percent by weight, being 100 minus the combined amount, in total percent by weight, of (e)-(g) ; and

AB. as a bonding accelerator, an admixture comprising

(a) from about 0.5 to about 30 percent by weight of at least one oxidizing agent, said oxidizing agent being reactive at room temperature with said reducing agent to generate free radicals effective to initiate addition polymerization of said polymerizable adhesive composition ;

(b) an effective amount of at least one phosphorous-containing compound having the formulae

$$X - R - \overset{\overset{O}{\|}}{\underset{\underset{OH}{|}}{P}} - R - X \qquad (I)$$

wherein each radical R is the same or different, and each radical R is independently a divalent organic radical directly bonded to the phosphorous atom through a carbon-phosphorous bond, said divalent radical being a divalent unsubstituted organic radical or divalent organic radical having at least one substituent group in form of halogen, hydroxyl, amino, alkyl radicals containing from 1 to 8 carbon atoms or aryl radicals having at least one moiety containing at least one aromatic nucleus ; and wherein each radical X is the same or different, and each radical X is independently a functional group in form of hydrogen, hydroxyl, amino, mercapto, halogen or $CH_2{=}C{<}$ ; or

$$X - R - \overset{\overset{O}{\|}}{\underset{\underset{OH}{|}}{P}} - O - R^1 \qquad (II)$$

wherein the radicals R and X are as previously defined ; and $R^1$ is hydrogen or —$R^2$—X, wherein $R^2$ is a divalent organic radical directly bonded to the oxygen radical through a carbon-oxygen bond, said divalent radical $R^2$ being a divalent unsubstituted organic radical or a divalent organic radical having at least one substituent group in form of halogen, hydroxyl, amino, alkyl radicals containing from 1 to 8 carbon atoms or aryl radicals having at least one moiety containing at least one aromatic nucleus and X is as previously defined ; or

$$R^1 - O - \overset{\overset{O}{\|}}{\underset{\underset{OH}{|}}{P}} - O - R^1 \qquad (III)$$

wherein $R^1$ is as previously described ;

(c) from zero to about 5 percent by weight of at least one free radical scavenger ; and

(d) from about 40 to about 99 percent by weight of a carrier vehicle comprising at least one inert organic diluent, said carrier vehicle being capable of maintaining said oxidizing agent and said phosphorous-containing compound as a stable solution or dispersion.

20. An adhesive system according to claim 19, characterized in that said bonding accelerator contains from about 0.05 to about 50 percent by weight of at least one organic polymeric film-forming binder material in form of a saturated organic polymeric composition having a glass transition temperature in the range from about 0 °C to about 150 °C or a polymer-in-monomer syrup consisting essentially of

i) from about 2 to about 60 percent by weight of at least one addition polymer ;

ii) from about 10 to about 98 percent by weight of at least one polymerizable olefinically unsaturated compound having at least one $>C{=}C<$ group ; and

iii) from zero to about 30 percent by weight of a polymer containing the group $(CH_2CCl{=}CH{-}CH_2)_n$, wherein n is an integer ;

wherein (i) and (ii) are present as a partial polymerization product of (ii) or of (ii) in the presence of (iii), the mixture of (i) and (ii) or of (i), (ii) and (iii) being a syrup of polymeric materials dissolved or dispersed in monomer, in which syrup the amount of (i) derived from (ii) is in the range from about 2 to about 90 percent by weight, based on the total weight of (i), (ii) and (iii) ; and from about 40 to about 99 percent by weight of a carrier vehicle comprising at least one inert organic diluent, said carrier vehicle being capable of maintaining said oxidizing agent and said film-forming binder material as a stable solution or dispersion.

**Revendications**

1. Système d'adhésif durcissable à la température ambiante, caractérisé en ce qu'il comprend :

A. comme composition adhésive polymérisable, un mélange de :

(a) environ 10 à environ 90 % en poids d'au moins une matière polymérisable choisie parmi le styrène, le méthacrylate de méthyle, le méthacrylate d'éthyle, le méthacrylate de n-butyle, le méthacrylate d'isobutyle, le méthacrylate de t-butyle, le méthacrylate d'hexyle, le méthacrylate d'éthylhexyle, un sirop partiellement polymérisé d'un ou plusieurs de ces monomères, ce sirop contenant à la fois du polymère et un monomère non polymérisé, et des mélanges de ceux-ci ;

(b) environ 10 à environ 90 % en poids d'au moins un produit de réaction d'au moins un prépolymère à fonctionnalité isocyanate et d'au moins un monomère à fonctionnalité hydroxyle ayant au moins un motif d'insaturation oléfinique polymérisable, ce produit de réaction étant caractérisé par la présence d'au moins deux motifs d'insaturation oléfinique et par l'absence pratique de groupes isocyanates libres ;

(c) 0 à environ 20 % en poids d'au moins un monomère à insaturation oléfinique polymérisable, la quantité de ce monomère venant s'ajouter à la quantité de l'un quelconque de ces monomères utilisés en A(a) ;

(d) 0 à environ 40 % en poids d'au moins une matière polymère élastomère ayant une température de durcissement inférieure à environ 5 °C ;

les pourcentages respectifs de (a)-(d) étant basés sur le poids total de (a)-(d) ;

(e) une quantité efficace d'au moins un composé phosphoré répondant à la formule :

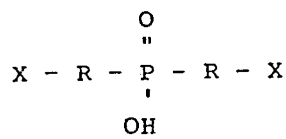
(I)

dans laquelle les R sont identiques ou différents et chacun des R est indépendamment un radical organique bivalent directement lié à l'atome de phosphore par une liaison carbone-phosphore, ce radical bivalent étant choisi dans le groupe constitué d'un radical organique non substitué et d'un radical organique bivalent ayant au moins un substituant choisi parmi les halogènes, les groupes hydroxyle, amino, alkyle en $C_1$ à $C_8$ et aryle avec au moins une partie contenant au moins un noyau aromatique ; et dans laquelle les X sont identiques ou différents, et chaque X est indépendamment un groupe fonctionnel choisi parmi l'hydrogène, les groupes hydroxyle, amino, mercapto, les halogènes et CH=C< ; ou

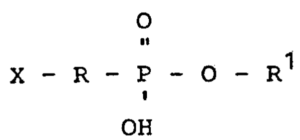
(II)

dans laquelle R et X sont tels que précédemment définis ; et $R_1$ est l'hydrogène ou —$R^2$—X, où $R^2$ est un radical organique bivalent directement lié au radical oxygène par une liaison carbone-oxygène, ce radical bivalent $R^2$ étant un radical organique bivalent non substitué ou un radical organique bivalent porteur d'au moins un substituant choisi parmi les halogènes, les groupes hydroxyle, amino, alkyle en $C_1$ à $C_8$ et aryle avec au moins une partie contenant au moins un noyau aromatique, et X est tel que précédemment défini ; ou

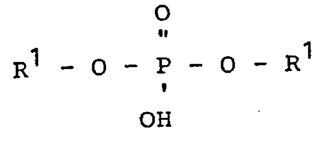
(III)

dans laquelle $R^1$ est tel que précédemment décrit :

(f) une quantité efficace d'au moins un agent réducteur ;

(g) 0 à environ 10 % en poids d'une composition adhésive polymérisable d'au moins une amine tertiaire répondant à la formule :

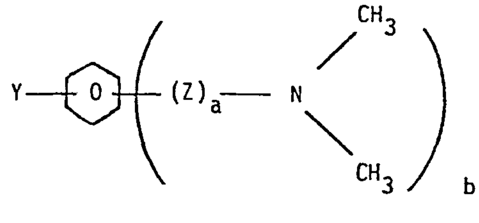
(IV)

dans laquelle Z est un groupe méthylène, Y est choisi parmi l'hydrogène, les groupes hydroxyle, amino, les halogènes, les groupes alkyle en $C_1$ à $C_8$, et alcoxy dont la partie alkyle est en $C_1$ à $C_8$ ; a est zéro ou 1 ; et b est 1 ou 2 ;

(h) 0 à environ 15 % en poids de la composition adhésive polymérisable d'un mélange d'un molybdate alcalin choisi parmi le molybdate de zinc, le molybdate de calcium, le molybdate de baryum, le molybdate de strontium et les mélanges de ceux-ci et un phosphate métallique choisi parmi le phosphate de zinc, le phosphate de calcium, le phosphate de magnésium et leurs mélanges ; ce molybdate métallique étant présent à une concentration volumique d'environ 2 à environ 3 parties par partie de ce phosphate métallique ; et

(i) 0 à environ 15 % en poids de la composition d'adhésif polymérisable d'au moins un composé choisi parmi les sels de plomb polybasiques de l'acide phosphoreux, des sels de plomb polybasiques d'acides et d'anhydrides dicarboxyliques organiques saturés, des sels de plomb polybasiques d'acides et d'anhydrides dicarboxyliques organiques insaturés, l'oxyde de zinc et des mélanges de ceux-ci ;
le pourcentage de (a)-(d) étant de 100 moins les pourcentages combinés de (e)-(i) ; et

B. comme accélérateur de liaison, une quantité efficace d'au moins un agent oxydant, l'agent oxydant étant réactif à la température ambiante avec l'agent réducteur pour former des radicaux libres efficaces pour amorcer la polymérisation par addition de la composition d'adhésif polymérisable.

2. Système adhésif suivant la revendication 1, caractérisé en ce que le composé phosphoré est présent dans une proportion dans l'intervalle d'environ 0,1 à environ 20 % en poids de la composition d'adhésif polymérisable ; l'agent réducteur est présent dans une proportion dans l'intervalle d'environ 0,05 à environ 10 % en poids de la composition d'adhésif polymérisable ; l'agent oxydant est présent dans une proportion dans l'intervalle d'environ 0,5 à environ 30 % en poids de l'accélérateur de liaison ; et l'accélérateur de liaison contient d'environ 40 à environ 99,5 % en poids d'un véhicule de support comprenant au moins un diluant organique inerte, ce véhicule de support étant capable de maintenir l'agent oxydant sous forme de solution ou de dispersion stable.

3. Système d'adhésif suivant la revendication 2, caractérisé en ce que l'amine tertiaire répondant à la formule V est présente dans une proportion dans l'intervalle d'environ 0,01 à environ 10 % en poids.

4. Système d'adhésif suivant la revendication 2, caractérisé en ce que l'accélérateur de liaison contient environ 0,05 à environ 50 % en poids d'au moins une matière liante filmogène polymère organique sous forme d'une composition polymère organique saturée ayant une température de durcissement dans l'intervalle d'environ 0 à environ 150 °C et d'un sirop polymère-dans-monomère, ce sirop polymère-dans-monomère se composant essentiellement de :

(1) environ 2 à environ 60 % en poids d'au moins un polymère d'addition ;

(2) environ 10 à environ 98 % en poids d'au moins un composé à insaturation oléfinique polymérisable ayant au moins un groupe $>C=C<$ ; et

(3) 0 à environ 30 % en poids d'un polymère contenant le groupe $(CH_2CCl=CH-CH_2)_n$, dans lequel n est un entier ;
système dans lequel (1) et (2) sont présents sous forme de produits de polymérisation partielle de (2) ou de (2) en présence de (3), le mélange de (1) et de (2) ou de (1), (2) et (3) étant un sirop de matières polymères dissoutes ou dispersées dans du monomère, dans lequel sirop la quantité de (1) dérivant de (2) se trouve dans l'intervalle d'environ 2 à environ 90 % en poids par rapport au poids total de (1), (2) et (3) ; le véhicule de support étant capable de maintenir l'agent oxydant et la matière liante filmogène sous forme de solution ou de dispersion stable.

5. Système d'adhésif suivant la revendication 4, caractérisé en ce que l'amine tertiaire répondant à la formule V est présente dans une proportion dans l'intervalle d'environ 0,01 à environ 10 % en poids.

6. Système d'adhésif suivant la revendication 1, caractérisé en ce que le composé phosphoré répond à la formule :

$$(CH_2=\underset{R^3}{\underset{|}{C}}-\overset{O}{\overset{\|}{C}}-O-A)_m-\underset{OH}{\underset{|}{\overset{O}{\overset{\|}{P}}}}-(OR)_{2-m}\quad,\qquad (IV)$$

dans laquelle $R^3$ est choisi parmi l'hydrogène, les groupes halogène, alkyle en $C_1$ à $C_8$, et $CH_2=CH-$ ; $R^4$ est choisi parmi l'hydrogène, les groupes alkyle en $C_1$ à $C_8$ et haloalkyle en $C_1$ à $C_8$ ; A est choisi parmi $-R^5O-$ et $(R^6O)_n$, où $R^5$ est un groupe alkylène aliphatique ou cycloaliphatique en $C_1$ à $C_9$ ; $R^6$ est un groupe alkylène en $C_1$ à $C_7$ ; n est un entier de 2 à 10 et m est 1 ou 2.

7. Système d'adhésif suivant la renvendication 6, caractérisé en ce que le composé phosphoré est présent dans une proportion dans l'intervalle d'environ 0,1 à environ 20 % en poids de la composition d'adhésif polymérisable, l'agent réducteur est présent dans une proportion dans l'intervalle d'environ 0,05 à environ 10 % en poids de la composition d'adhésif polymérisable ; l'agent oxydant est présent dans une proportion dans l'intervalle d'environ 0,5 à environ 30 % en poids de l'accélérateur de liaison ; et l'accélérateur de liaison contient d'environ 10 à environ 99,5 % en poids de l'accélérateur de liaison d'un

véhicule de support comprenant au moins un diluant organique inerte, ce véhicule de support étant capable de maintenir cet agent oxydant sous forme de solution ou de dispersion stable.

8. Système d'adhésif suivant la revendication 7, caractérisé en ce que l'amine tertiaire répondant à la formule V est présente dans une proportion d'environ 0,01 à environ 10 % en poids.

9. Système d'adhésif suivant la revendication 6, caractérisé en ce que l'accélérateur de liaison contient d'environ 0,05 à environ 50 % en poids d'au moins une matière de liaison filmogène polymère organique formée d'une composition polymère organique saturée avant une température de durcissement dans l'intervalle d'environ 0 °C à environ 150 °C et un sirop polymère-dans-monomère, ce sirop polymère-dans-monomère se composant essentiellement de :

(1) environ 2 à environ 60 % en poids d'au moins un polymère d'addition ;

(2) environ 10 à environ 98 % en poids d'au moins un composé à insaturation oléfinique polymérisable ayant au moins un groupe $>C=C<$ ; et

(3) 0 à environ 30 % en poids d'un polymère contenant le groupe $(CH_2CCl=CH-CH_2)_n$, dans lequel n est un entier ;

système dans lequel (1) et (2) sont présents sous forme de produit de polymérisation partielle de (2) ou de (2) en présence de (3), le mélange de (1) et de (2) ou de (1), (2) et (3) étant un sirop de matières polymères dissoutes ou dispersées dans du monomère, dans lequel sirop la quantité de (1) dérivant de (2) est dans l'intervalle d'environ 2 à environ 90 % en poids par rapport au poids total de (1), (2) et (3) le véhicule du support étant capable de maintenir l'agent oxydant et la matière liante filmogène sous forme de solution ou de dispersion stable.

10. Système d'adhésif suivant la revendication 9, caractérisé en ce que l'amine tertiaire répondant à la formule V est présente dans une proportion dans l'intervalle d'environ 0,01 à environ 10 % en poids.

11. Système d'adhésif durcissable à la température ambiante, caractérisé en ce qu'il comprend :

A. comme composition d'adhésif polymérisable, un mélange de :

(a) environ 10 à environ 90 % en poids d'au moins une matière polymérisable choisie parmi le styrène, le méthacrylate de méthyle, le méthacrylate d'éthyle, le méthacrylate de n-butyle, le méthacrylate d'isobutyle, le méthacrylate de t-butyle, le méthacrylate d'hexyle, le méthacrylate d'éthylhexyle, un sirop partiellement polymérisé d'un ou plusieurs de ces monomères, ce sirop contenant à la fois du polymère ou du monomère non polymérisé et des mélanges de ceux-ci ;

(b) environ 10 à environ 90 % en poids d'au moins un produit de réaction d'au moins un prépolymère à fonctionnalité isocyanate, d'au moins un monomère à fonctionnalité hydroxyle, ayant au moins un motif d'insaturation oléfinique polymérisable, ce produit de réaction étant caractérisé par la présence d'au moins deux motifs d'insaturation oléfinique et par l'absence pratique de groupes isocyanates libres ;

(c) 0 à environ 20 % en poids d'au moins un monomère à insaturation oléfinique polymérisable, la quantité de ce monomère venant s'ajouter à la quantité de l'un quelconque de ces monomères utilisés en A(a) ;

(d) 0 à environ 40 % en poids d'au moins une matière polymère élastomère ayant une température de durcissement inférieure à environ 5 °C ;

les pourcentages respectifs de (a)-(d) étant basés sur le poids total de (a)-(d) ;

(e) une quantité efficace d'au moins un agent réducteur ;

(f) 0 à environ 15 % en poids d'une composition d'adhésif polymérisable d'un mélange de molybdate métallique choisi parmi le molybdate de zinc, le molybdate de calcium, le molybdate de baryum, le molybdate de strontium, et les mélanges de ceux-ci et un phosphate métallique choisi parmi le phosphate de zinc, le phosphate de calcium, le phosphate de magnésium et leurs mélanges ; ce molybdate métallique étant présent à une concentration volumique d'environ 2 à environ 3 parties par partie de ce phosphate métallique ; et

(g) 0 à environ 15 % en poids d'une composition d'adhésif polymérisable d'au moins un composé choisi parmi les sels de plomb polybasiques de l'acide phosphoreux, les sels de plomb polybasiques d'acides et d'anhydrides dicarboxyliques organiques saturés, les sels de plomb polybasiques d'acides et d'anhydrides dicarboxyliques organiques insaturés, l'oxyde de zinc et les mélanges de ceux-ci ; et

la quantité de (a)-(d) en pourcentage pondéral, étant égale à 100 moins la proportion combinée en pourcentage total en poids de (e)-(g) ; et

B. comme accélérateur de liaison, un mélange comprenant ;

(a) environ 0,5 à environ 30 % en poids d'au moins un agent oxydant, cet agent oxydant étant réactif à la température ambiante avec l'agent réducteur pour former des radicaux libres efficaces pour amorcer la polymérisation par addition de la composition d'adhésif polymérisable ;

(b) environ 0,1 à environ 20 % en poids d'au moins un composé phosphoré répondant à la formule

$$X-R-\overset{\overset{\displaystyle O}{\|}}{\underset{\underset{\displaystyle OH}{|}}{P}}-R-X \qquad (I)$$

dans laquelle les R sont identiques ou différents et chacun des R est indépendamment un radical

organique bivalent directement lié à l'atome de phosphore par une liaison carbone-phosphore, ce radical bivalent étant un radical organique non substitué bivalent ou un radical organique bivalent ayant au moins un groupe substituant choisi parmi les halogènes, les groupes hydroxyle, amino, alkyle en $C_1$ à $C_8$, et aryle avec au moins une partie contenant au moins un noyau aromatique ; et dans laquelle les X sont identiques ou différents, et chacun des X est indépendamment un groupe fonctionnel choisi parmi l'hydrogène, les groupes hydroxyle, amino, mercapto, halogène et $CH_2{=}C<$; ou

$$X - R - \underset{OH}{\overset{\overset{O}{\|}}{P}} - O - R^1 \qquad (II)$$

dans laquelle R et X sont tels que précédemment définis ; et $R^1$ est l'hydrogène ou $—R^2—X$, où $R^2$ est un radical organique bivalent directement lié au radical oxygène par une liaison carbone-oxygène, ce radical bivalent $R^2$ étant un radical organique non substitué bivalent ou un radical organique bivalent porteur d'au moins un substituant choisi parmi les halogènes, les groupes hydroxyle, amino, alkyle en $C_1$ à $C_8$ et aryle avec au moins une partie contenant au moins un noyau aromatique, et X est tel que précédemment défini ; ou

$$R^1 - O - \underset{OH}{\overset{\overset{O}{\|}}{P}} - O - R^1 \qquad (III)$$

dans laquelle $R^1$ est tel que précédemment décrit :

(c) 0 à environ 5 % en poids d'au moins un composé capteur de radicaux libres ; et

(d) environ 40 à environ 99 % en poids d'un véhicule de support comprenant au moins un diluant organique inerte, ce véhicule de support étant capable de maintenir l'agent oxydant et le composé phosphoré sous forme de solution ou de dispersion stable.

12. Système d'adhésif suivant la revendication 11, caractérisé en ce que cet agent réducteur est présent dans une proportion dans l'intervalle d'environ 0,05 à environ 10 % en poids de la composition d'adhésif polymérisable.

13. Système d'adhésif suivant la revendication 11, caractérisé en ce que ce composé phosphoré répond à la formule :

$$(CH_2 = \underset{R^3}{C} - \overset{\overset{O}{\|}}{C} - O - A)_m - \underset{OH}{\overset{\overset{O}{\|}}{P}} -(OR)_{2-m}, \qquad (IV)$$

dans laquelle $R^3$ est choisi parmi l'hydrogène, les halogènes, les groupes alkyle en $C_1$ à $C_8$ et $CH_2{=}CH—$ ; $R^4$ est choisi parmi l'hydrogène, les groupes alkyle en $C_1$ à $C_8$ et haloalkyle en $C_1$ à $C_8$ ; A est choisi parmi $—R^5O—$ et $(R^6O)_n$, où R est un groupe alkylène aliphatique ou cycloaliphatique en $C_1$ à $C_9$ ; $R^6$ est un groupe alkylène en $C_1$ à $C_7$ ; n est un entier de 2 à 10 et m est 1 ou 2.

14. Système d'adhésif suivant la revendication 13, caractérisé en ce que cet agent réducteur est présent dans une proportion dans l'intervalle d'environ 0,05 à environ 10 % en poids de la composition adhésive polymérisable.

15. Système d'adhésif suivant la revendication 13, caractérisé en ce que cet accélérateur de liaison contient d'environ 0,05 à environ 50 % en poids d'au moins une matière liante filmogène polymère organique sous la forme d'une composition polymère organique saturée à une température de durcissement dans l'intervalle d'environ 0 °C à environ 150 °C et un sirop polymère-dans-monomère, ce sirop polymère-dans-monomère se composant essentiellement de :

(1) environ 2 à environ 60 % en poids d'au moins un polymère d'addition ;

(2) environ 10 à environ 98 % en poids d'au moins un composé à insaturation oléfinique polymérisable ayant au moins un groupe $>C{=}C<$ ; et

(3) 0 à environ 30 % en poids d'un polymère contenant le groupe $(CH_2CCl{=}CH—CH_2)_n$, dans lequel n est un entier ;

système dans lequel (1) et (2) sont présents sous forme de produit de polymérisation partielle de (2) ou de (2) en présence de (3), le mélange de (1) et (2) ou de (1), (2) et (3) étant un sirop de matière polymère dissoute ou dispersée dans du monomère, dans lequel sirop la quantité de (1) dérivant de (2) est dans l'intervalle d'environ 2 à environ 90 % en poids par rapport au poids total de (1), (2) et (3) ; et

le véhicule de support étant capable de maintenir l'agent oxydant, le composé phosphoré et la matière liante filmogène sous forme de solution ou de dispersion stable.

16. Système d'adhésif suivant la revendication 15, caractérisé en ce que l'agent réducteur est présent dans une proportion dans l'intervalle d'environ 0,05 à environ 10 % en poids de la composition adhésive polymérisable.

17. Système d'adhésif durcissable à la température ambiante, caractérisé en ce qu'il comprend :

AA. comme composition d'adhésif polymérisable, un mélange de :

(a) environ 1 à environ 30 % en poids d'au moins une matière polymère élastomère choisie parmi un homopolymère de polybutadiène, un copolymère du butadiène et au moins un monomère copolymérisable avec celui-ci choisi parmi le styrène, l'acrylonitrile, le méthacrylonitrile et les mélanges de ceux-ci ; une matière polymère modifiée sous forme d'un homopolymère du polybutadiène ou d'un copolymère du butadiène tels que précédemment définis, lesquels homopolymère et copolymère ont été modifiés par copolymérisation dans ceux-ci de traces allant jusqu'à environ 5 % en poids par rapport au poids de la matière élastomère, d'au moins un monomère fonctionnel ;

(b) environ 25 à environ 85 % en poids d'au moins un monomère acrylique ou acrylique substitué polymérisable ;

(c) 0 à environ 50 % en poids d'au moins un monomère non acrylique sans insaturation oléfinique polymérisable ;

(d) 0 à environ 60 % en poids d'au moins une matière polymère ayant une viscosité intrinsèque dans l'intervalle d'environ 0,1 à environ 1,3 dérivant d'au moins un de ces monomères (b) et (c) ;

les quantités de (a)-(d) étant basées sur le poids total de (a)-(d) ;

(e) une quantité efficace d'au moins un composé phosphoré répondant à la formule

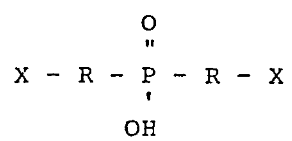

(I)

dans laquelle les R sont identiques ou différents et chaque R est indépendamment un radical organique bivalent directement lié à l'atome de phosphore par une liaison carbone-phosphore, ce radical bivalent étant un radical organique non substitué bivalent ou un radical organique bivalent porteur d'au moins un groupe substituant choisi parmi les halogènes, les groupes hydroxyle, amino, alkyle en $C_1$ à $C_8$ et aryle avec au moins une partie contenant au moins un noyau aromatique ; et dans laquelle les X sont identiques ou différents et chacun des X est indépendamment un groupe fonctionnel choisi parmi l'hydrogène, les groupes hydroxyle, amino, mercapto, les halogènes et $CH_2{=}C\lt$ ;

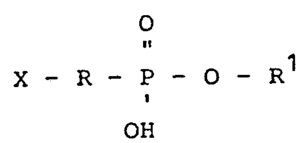

(II)

dans laquelle R et X sont tels que précédemment définis, et $R^1$ est l'hydrogène ou $—R^2—X$, où $R^2$ est un radical organique bivalent directement lié au radical oxygène par une liaison carbone-oxygène, ce radical bivalent $R^2$ étant un radical organique non substitué bivalent ou un radical organique bivalent porteur d'au moins un groupe substituant choisi parmi les halogènes, les groupes hydroxyle, amino, alkyle en $C_1$ à $C_8$ et aryle avec au moins une partie contenant au moins un noyau aromatique ; et X tel que précédemment défini ; et

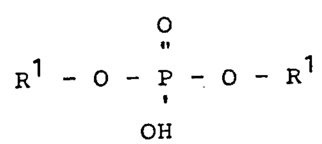

(III)

dans laquelle $R^1$ est tel que précédemment décrit :

(f) une quantité efficace d'au moins un agent réducteur ;

(g) 0 à environ 10 % en poids d'une composition d'adhésif polymérisable d'au moins une amine tertiaire répondant à la formule :

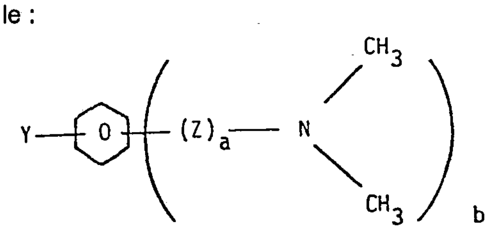

(V)

dans laquelle Z est un groupe méthylène ; Y est choisi parmi l'hydrogène, les groupes hydroxyle, amino, les halogènes, les groupes alkyle en $C_1$ à $C_8$ et alkoxy où la partie alkyle est en $C_1$ à $C_8$ ; a est zéro ou 1 ; et b est 1 ou 2 ;

(h) 0 à environ 15 % en poids d'une composition adhésive polymérisable d'un mélange de molybdate métallique choisi parmi le molybdate de zinc, le molybdate de calcium, le molybdate de baryum, le molybdate de strontium et leurs mélanges, et d'un phosphate métallique choisi parmi le phosphate de zinc, le phosphate de calcium, le phosphate de magnésium et leurs mélanges ; ce molybdate métallique étant présent dans une concentration volumique d'environ 2 à environ 3 parties par parties de ce phosphate métallique ; et

(j) 0 à environ 15 % en poids d'une composition adhésive polymérisable d'au moins un composé choisi parmi les sels de plomb polybasiques de l'acide phosphoreux ; les sels de plomb polybasiques d'acides et d'anhydrides dicarboxyliques organiques saturés, l'oxyde de zinc, et les mélanges de ceux-ci ; le pourcentage de (a)-(e) étant de 100 moins les pourcentages combinés de (f)-(j), et ;

AB. comme accélérateur de liaison, une quantité efficace d'au moins un agent oxydant, l'agent oxydant étant réactif à la température ambiante avec l'agent réducteur pour former des radicaux libres efficaces pour amorcer la polymérisation par addition de la composition d'adhésif polymérisable.

18. Système d'adhésif suivant la revendication 17, caractérisé en ce que l'accélérateur de liaison contient environ 0,05 à environ 50 % en poids d'au moins une matière liante filmogène polymère organique choisie parmi une composition polymère organique saturée ayant une température de durcissement dans l'intervalle d'environ 0 à environ 150 °C et un sirop polymère-dans-monomère, ce sirop polymère-dans-monomère se composant essentiellement de

(1) environ 2 à environ 60 % en poids d'au moins un polymère d'addition ;

(2) environ 10 à environ 98 % en poids d'au moins un composé à insaturation oléfinique polymérisable ayant au moins un groupe $>C=C<$ ; et

(3) 0 à environ 30 % en poids d'un polymère contenant le groupe $(CH_2CCl=CH—CH_2)_n$, dans lequel n est un entier ;

système dans lequel (1) et (2) sont présents en tant que produits de polymérisation partielle de (2) ou de (2) en présence de (3), le mélange de (1) et (2) ou de (1), (2) et (3) étant un sirop de matières polymères dissoutes ou dispersées dans du monomère, dans lequel sirop la quantité de (1) dérivant de (2), est dans l'intervalle d'environ 2 à environ 90 % en poids par rapport au poids total de (1), (2) et (3) ; avec environ 40 à environ 99 % en poids d'un véhicule de support comprenant au moins un diluant organique inerte, ce véhicule de support étant capable de maintenir l'agent oxydant et la matière liante filmogène sous forme de solution ou de dispersion stable.

19. Système d'adhésif durcissable à la température ambiante, caractérisé en ce qu'il comprend :

AA. comme composition d'adhésif polymérisable, un mélange de :

(a) environ 1 à environ 30 % en poids d'au moins une matière polymère élastomère choisie parmi un homopolymère du polybutadiène, un copolymère du butadiène et au moins un monomère copolymérisable avec celui-ci choisi parmi le styrène, l'acrylonitrile, le méthacrylonitrile et les mélanges de ceux-ci, une matière polymère modifiée choisie parmi un homopolymère du butadiène et un copolymère de butadiène tels que précédemment décrits, lesquels homopolymère et copolymère ont été modifiés par copolymérisation dans ceux-ci de traces allant jusqu'à environ 5 % en poids par rapport au poids de la matière élastomère, d'au moins un monomère fonctionnel,

(b) environ 25 à environ 85 % en poids d'au moins un monomère acrylique ou acrylique substitué polymérisable ;

(c) 0 à environ 50 % en poids d'au moins un monomère non acrylique à insaturation oléfinique polymérisable ;

(d) 0 à environ 60 % en poids d'au moins une matière polymère ayant une viscosité intrinsèque dans l'intervalle d'environ 0,1 à environ 1,3 dérivant d'au moins un de ces monomères (b) et (c) ;

les quantités de (a)-(d) étant basées sur le poids de (a)-(d) ;

(e) une proportion efficace d'au moins un agent réducteur ;

(f) 0 à environ 15 % en poids d'une composition d'adhésif polymérisable d'un mélange de molybdate métallique choisi parmi le molybdate de zinc, le molybdate de calcium, le molybdate de baryum, le molybdate de strontium et leurs mélanges et d'un phosphate métallique choisi parmi le phosphate de zinc, le phosphate de calcium, le phosphate de magnésium et leurs mélanges ; ce molybdate métallique étant présent dans une concentration en volume d'environ 2 à environ 3 parties par partie du phosphate métallique ; et

(g) 0 à environ 15 % en poids d'une composition adhésive polymérisable d'au moins un composé choisi parmi les sels de plomb polybasiques de l'acide phosphoreux, des sels de plomb polybasiques d'acides et d'anhydrides dicarboxyliques organiques saturés, les sels de plomb polybasiques d'acides et d'anhydrides dicarboxyliques organiques insaturés, l'oxyde de zinc et les mélanges de ceux-ci,

la quantité de (a)-(d) en pourcentage pondéral, étant de 100 moins la quantité combinée, en pourcentage pondéral total, de (e)-(g) ; et

AB. comme accélérateur de liaison, un mélange de :

(a) environ 0,5 à environ 30 % en poids d'au moins un agent oxydant, cet agent oxydant étant réactif à la température ambiante avec l'agent réducteur pour former des radicaux libres efficaces pour

amorcer la polymérisation par addition de la composition d'adhésif polymérisable ;

(b) une quantité efficace d'au moins un composé phosphoré répondant à la formule :

$$X - R - \overset{O}{\underset{OH}{\overset{\|}{\underset{|}{P}}}} - R - X \qquad (I)$$

dans laquelle les R sont identiques ou différents et chacun des R est indépendamment un radical organique bivalent lié directement à l'atome de phosphore par une liaison carbone-phosphore, ce radical bivalent étant un radical organique non substitué bivalent ou un radical organique bivalent porteur d'au moins un groupe substituant, choisi parmi les halogènes, les groupes hydroxyle, amino, alkyle en $C_1$ à $C_8$, et aryle avec au moins une partie contenant au moins un noyau aromatique ; et dans laquelle les X sont identiques ou différents et chacun des X est indépendamment un groupe fonctionnel choisi parmi l'hydrogène, les groupes hydroxyle, amino, mercapto, les halogènes et $CH_2{=}C{<}$;

$$X - R - \overset{O}{\underset{OH}{\overset{\|}{\underset{|}{P}}}} - O - R^1 \qquad (II)$$

dans laquelle R et X sont tels que précédemment définis ; et $R^1$ est l'hydrogène ou $—R^2—X$, où $R^2$ est un radical organique bivalent directement lié au radical oxygène par une liaison carbone-oxygène, ce radical bivalent $R^2$ étant un radical organique non substitué bivalent ou un radical organique bivalent porteur d'au moins un groupe substituant choisi parmi les halogènes, les groupes hydroxyle, amino, alkyle en $C_1$ à $C_8$ et aryle avec au moins une partie contenant au moins un noyau aromatique, et X est tel que précédemment défini ; et

$$R^1 - O - \overset{O}{\underset{OH}{\overset{\|}{\underset{|}{P}}}} - O - R^1 \qquad (III)$$

dans laquelle $R^1$ est tel que précédemment défini ;

(c) 0 à environ 5 % en poids d'au moins un composé capteur de radicaux libres ; et

(d) environ 40 à environ 99 % en poids d'un véhicule de support comprenant au moins un diluant organique inerte, ce véhicule de support étant capable de maintenir cet agent oxydant et ce composé phosphoré sous forme de solution ou de dispersion stable.

20. Système adhésif suivant la revendication 19, caractérisé en ce que l'accélérateur de liaison contient d'environ 0,05 à environ 50 % en poids d'au moins une matière liante filmogène polymère choisie parmi une composition polymère organique saturée ayant une température de durcissement dans l'intervalle d'environ 0 à environ 150 °C et un sirop polymère-dans-monomère constitué essentiellement de :

(1) environ 2 à environ 60 % en poids d'au moins un polymère d'addition ;

(2) environ 10 à environ 98 % en poids d'au moins un composé à insaturation oléfinique polymérisable ayant au moins un groupe $>C{=}C<$ ; et

(3) 0 à environ 30 % en poids d'un polymère contenant le groupe $(CH_2CCl{=}CH—CH_2)_n$, dans lequel n est un entier ;

système dans lequel (1) et (2) sont présents sous forme de produit de polymérisation partielle de (2) ou de (2) en présence de (3), le mélange de (1) et de (2) ou de (1), (2) et (3) étant un sirop de matières polymères dissoutes ou dispersées dans du monomère, dans lequel sirop la quantité de (1) dérivant de (2) est dans l'intervalle d'environ 2 à environ 90 % en poids, par rapport au poids total de (1), (2) et (3) ; avec environ 40 à environ 99 % en poids d'un véhicule de support comprenant au moins un diluant organique inerte, ce véhicule de support étant capable de maintenir l'agent oxydant et la matière liante filmogène sous forme de solution ou de dispersion stable.